(19) Europäisches Patentamt
European Patent Office
Office européen des brevets

(11) **EP 3 724 989 B1**

(12) **EUROPÄISCHE PATENTSCHRIFT**

(45) Veröffentlichungstag und Bekanntmachung des Hinweises auf die Patenterteilung:
**05.11.2025   Patentblatt 2025/45**

(21) Anmeldenummer: **18814820.9**

(22) Anmeldetag: **29.11.2018**

(51) Internationale Patentklassifikation (IPC):
**B60L 53/24** *(2019.01)*   **B60L 58/15** *(2019.01)*
**G01P 3/488** *(2006.01)*   **H02J 7/14** *(2006.01)*
**H02P 9/48** *(2006.01)*

(52) Gemeinsame Patentklassifikation (CPC):
**H02P 9/48; B60L 53/24; B60L 58/15; H02J 7/14;**
B60L 2210/30; F02D 2250/24; G01P 3/488;
H02P 2101/45; H02P 2103/20; Y02T 10/64;
Y02T 10/70; Y02T 10/7072; Y02T 10/72;
Y02T 90/14

(86) Internationale Anmeldenummer:
**PCT/EP2018/082926**

(87) Internationale Veröffentlichungsnummer:
**WO 2019/115239 (20.06.2019 Gazette 2019/25)**

(54) **BETREIBEN EINES LADEREGLERS FÜR EINEN ELEKTRISCHEN SPEICHER IN EINEM KRAFTFAHRZEUG**

OPERATING A CHARGE REGULATOR FOR AN ELECTRICAL ACCUMULATOR IN A MOTOR VEHICLE

ACTIONNER UN RÉGULATEUR DE CHARGE POUR UN ACCUMULATEUR ÉLECTRIQUE DANS UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:   **15.12.2017   DE 102017222843**

(43) Veröffentlichungstag der Anmeldung:
**21.10.2020   Patentblatt 2020/43**

(73) Patentinhaber: **Robert Bosch GmbH**
**70442 Stuttgart (DE)**

(72) Erfinder:
• **REINEKE, Bastian**
**71701 Schwieberdingen (DE)**
• **MUELLER, Jonathan**
**70563 Stuttgart (DE)**
• **FISCHER, Wolfgang**
**71272 Renningen (DE)**
• **GRODDE, Stefan**
**70469 Stuttgart (DE)**

(56) Entgegenhaltungen:
DE-A1- 10 150 374   DE-A1- 102010 033 535
DE-A1- 102014 206 173   US-A1- 2009 085 352

**Beschreibung**

Die vorliegende Erfindung betrifft ein Verfahren zum Betreiben eines Ladereglers für einen elektrischen Speicher, insbesondere einer Batterie eines Fahrzeugbordnetzes, welcher mit einer an eine Brennkraftmaschine direkt oder übersetzt koppelbaren elektrischen Maschine, umfassend einen Rotor, ein Stator mit zumindest einer Phasensignale erzeugenden Phasenwicklung, mit elektrischer Energie beaufschlagbar ist.

Stand der Technik

Die Drehwinkelposition und die Drehzahl der Kurbelwelle einer Brennkraftmaschine sind wesentliche Eingangsgrößen für viele Funktionen der elektronischen Motorsteuerung. Zu ihrer Ermittlung, können auf einem mit der Kurbelwelle der Brennkraftmaschine rotierenden Körper in gleichen Winkelabständen Markierungen vorgesehen sein. Das Vorbeistreichen einer Markierung infolge der Kurbelwellendrehung, kann durch einen Sensor erfasst und als elektrisches Signal an eine Auswertelektronik weitergegeben werden.

Diese Elektronik bestimmt für die jeweilige Drehwinkelposition der Kurbelwelle, das jeweils hierfür hinterlegte Signal für die Markierung bzw. misst eine Zeitdifferenz zwischen zwei Markierungen und kann aufgrund des bekannten Winkelabstands zweier Markierungen zueinander, die Winkelgeschwindigkeit und daraus die Drehzahl ermitteln. Bei Kraftfahrzeugen, insbesondere Motorrädern, Mopeds oder Krafträdern, können die Markierungen beispielsweise durch Zähne eines metallischen Zahnrads, eines sogenannten Geberrads, bereitgestellt werden, welche durch ihre Bewegung in dem Sensor eine Änderung des Magnetfelds bewirken. Eine Lücke von einigen Zähnen kann als Bezugsmarke zur Erkennung der absoluten Position dienen.

Während bei Pkws zumeist 60-2 Zähne verwendet werden (gleichmäßige Verteilung von 60 Zähnen, wobei zwei ausgespart bleiben), kommt bei Motor- bzw. Krafträdern beispielsweise auch 36-2, 24-2 oder 12-3 Zähne zum Einsatz. Bei diesem indirekten Prinzip der Drehgeschwindigkeitsbestimmung bzw. Drehwinkelpositionsbestimmung der Kurbelwelle, wird die Auflösung des Drehzahlsignals bzw. die absolute Erfassung der Drehwinkelposition durch die Anzahl der Zähne und durch eine sichere Erkennung der Bezugsmarke bestimmt.

Bei jedem modernen Fahrzeug mit Brennkraftmaschine, ist ein Generator verbaut, der durch die Drehung der Kurbelwelle angetrieben wird und elektrische Signale liefert, die zur Versorgung des Fahrzeugs mit elektrischer Energie und dem Aufladen der Fahrzeugbatterie dienen.

Die Auslegung des Generators erfolgt üblicherweise derart, dass der maximale Energiebedarf des Bordnetzes jederzeit bereitgestellt werden kann. Dies bedingt, dass in vielen Betriebspunkten der Brennkraftmaschine mehr elektrische Energie durch den Generator bereitgestellt wird, als zum Aufladen der Batterie bzw. zur Versorgung der mit dem Bordnetz verbundenen Komponenten benötigt wird. Bei einem Überangebot elektrischer Energie in einem jeweiligen Betriebspunkt muss stets ein Überladen der Batterie verhindert werden, so dass eine Beschädigung der Batterie verhindert wird. Hierfür wird der Generator häufig von den anderen Komponenten des Bordnetzes entkoppelt, wobei ein entsprechender Laderegler verwendet wird, durch den zum Beispiel durch Kurzschließen der Phasen oder das Versetzen des Generators in einen Leerlaufzustand eine Energieabgabe in die Batterie unterbunden wird. Im Falle einer fremderregten elektrischen Maschine kann mittels des Reglers auch eine Entregung der elektrischen Maschine erfolgen, wodurch diese in einen Leerlaufzustand versetzt werden kann. Insbesondere im Fall der Kurzschlussregelung, bei dem die überschüssige elektrische Energie in Wärme umgewandelt wird, und der die häufigste Art der Regelung, insbesondere bei motorisierten Zweirädern oder sonstigen Leichtkrafträdern dargestellt, belastet der Generator in diesem Fall die Brennkraftmaschine parasitär, da die in Wärme umgesetzte elektrische Energie nicht mehr als kinetische Energie für den Antrieb des Fahrzeugs zur Verfügung steht. Eine entsprechende Leerlaufregelung für eine elektrische Maschine wird in der Regel vermieden, da hierbei sehr hohe Spannungen auftreten können, welche zur Beschädigung von elektronischen Komponenten oder zur Gefährdung von Personen führen können. Deswegen wird häufig eine entsprechende Kurzschlussregelung, trotz der hierbei entstehenden Verlustleistung, in Kauf genommen.

Es wäre daher wünschenswert eine Möglichkeit einer Regelung der Batteriespannung anzugeben, bei der die Verlustleistung möglichst gering gehalten wird.

US 2009/085352 A1 offenbart eine Stromerzeugungs-Steuervorrichtung mit einem Schaltkreis, der eine Ausgabe eines Generators steuert. Eine periodische Leistungsladesteuereinheit wird während eines Verbrennungstakts eines Zylinders eines Verbrennungsmotors betrieben. Ein periodischer Leistungsladesteuerbereich ist derart voreingestellt, dass ein Verdichtungstakt eines anderen Zylinders des Verbrennungsmotors nicht überlappt wird.

DE 10 2010 033535 A1 offenbart ein Verfahren zum Betreiben eines Fahrzeugs, wobei Energie elektrisch rekuperiert wird, dadurch gekennzeichnet, dass die rekuperierte elektrische Energie zumindest teilweise zum Antreiben eines Verbrennungsmotors zum Verbrauchen der rekuperierten elektrischen Energie verwendet wird. Die Erfindung betrifft ferner ein System zum Betreiben eines Fahrzeugs sowie ein Steuerprogramm.

DE 101 50 374 A1 offenbart ein Verfahren und eine Vorrichtung zur Ansteuerung eines von einer Brennkraftmaschine angetriebenen Generators. Dieser versorgt mindestens eine Batterie mit Energie. Es wird der Ladezustand der Batterie ermittelt und in Abhängigkeit vom ermittelten Ladezustand eine Steuerung des Betriebsmodus des Generators durchgeführt, wobei der Generator in den verschiedenen Betriebsmodi unterschiedliche Ausgangsspannungen zur Verfügung stellt.

DE 10 2014 206173 A1 offenbart ein Verfahren zur Bestimmung einer Drehzahl einer Kurbelwelle einer Brennkraftmaschine, welche mit einer elektrischen Maschine, umfassend einen Rotor und einen Stator, direkt oder übersetzt gekoppelt ist, wobei ein oder mehrere Signale der elektrischen Maschine jeweils ein oder mehrere Werte aufweisen, die jeweils wenigstens einmal pro Umdrehung des Rotors auftreten; und wobei durch Berechnen einer Zeitdifferenz zwischen zwei Auftrittszeitpunkten von Werten die Drehzahl berechnet und zur Steuerung der Brennkraftmaschine verwendet wird.

Offenbarung der Erfindung

Die Erfindung wird durch die Merkmale der unabhängigen Ansprüche 1 und 13 definiert.

Vorteilhafte Ausgestaltungen sind Gegenstand der Unteransprüche sowie der nachfolgenden Beschreibung.

Vorteile der Erfindung

Bei einem Verfahren zum Betreiben eines Ladereglers für einen elektrischen Speicher, insbesondere eine Batterie eines Fahrzeugbordnetzes, welcher mit einer an eine Brennkraftmaschine direkt oder übersetzt koppelbaren oder gekoppelten elektrischen Maschine, umfassend einen Rotor, einen Stator mit zumindest einer Phasensignale erzeugenden Phasenwicklung, mit elektrischer Energie beaufschlagbar ist, wird nach Erreichen oder Überschreiten eines ersten Sollwerts des elektrischen Speichers die elektrische Maschine durch den Laderegler derart angesteuert, dass die elektrische Maschine motorisch betrieben wird. Bevorzugt weist die Brennkraftmaschine mit der Welle der elektrischen Maschine eine starre Kopplung auf. Dies ist besonders vorteilhaft, da zum einen bei Kenntnis der Position einer der Wellen auf die Position der jeweils anderen Welle zurückgeschlossen werden kann. Darüber hinaus kann eine besonders gute Drehmomentübertragung gewährleistet werden. Beim Überschreiten eines ersten Sollwerts des elektrischen Speichers, der insbesondere ein erster Sollwert der Spannung des Speichers ist, wird die elektrische Maschine motorisch betrieben, wodurch die in der elektrischen Batterie gespeicherte elektrische Energie zumindest teilweise in kinetische Energie, insbesondere zur Unterstützung der Brennkraftmaschine, umgewandelt wird, wodurch ein Überladen der Batterie durch die elektrische Maschine verhindert wird. Die Batteriespannung ist hierbei ein besonders guter Indikator, da diese typischerweise beim Ausschöpfen der Kapazität der Batterie in eine Sättigung läuft und besonders sicher erkannt und gemessen werden kann. Der motorische Betrieb der elektrischen Maschine kann hierbei die Brennkraftmaschine entsprechend unterstützen, was den Vorteil hat, dass die für eine Spannungsregelung aus der Batterie abgeleitete Energie nicht in Wärme, sondern in kinetische Energie umgesetzt wird, wodurch entsprechend die Brennkraftmaschine entlastet wird. Diese Maßnahme hat einen besonders vorteilhaften Einfluss auf die Energiebilanz des Systems aus Brennkraftmaschine und elektrischer Maschine und kann dabei helfen, den Kraftstoffverbrauch der Brennkraftmaschine zu reduzieren.

In einer erfindungsgemäßen Ausgestaltung des Verfahrens wird nach Erreichen oder Unterschreiten eines weiteren Sollwerts des elektrischen Speichers, der betragsmäßig kleiner als der erste Sollwert ist, die elektrische Maschine durch den Laderegler derart angesteuert, dass die elektrische Maschine generatorisch betrieben wird.

Der erste Schwellwert gibt hierbei vorzugsweise eine obere Schranke und der weitere Sollwert eine untere Schranke an, wobei durch den ersten und den zweiten Sollwert, die vorzugsweise Spannungswerte des elektrischen Speichers darstellen, ein Sollwertband definiert wird, innerhalb dem eine entsprechende Spannungsregelung des elektrischen Speichers stattfindet. Der weitere Schwellwert definiert hierbei eine untere Toleranzgrenze, bis zu dem der elektrische Speicher entweder mittels des motorischen Betriebs durch die elektrische Maschine entladen oder mittels weiterer Verbraucher aus dem Bordnetz entladen wird, bis erneut ein generatorischer Betrieb der elektrischen Maschine einsetzt. Hierbei wechselt die elektrische Maschine den Betriebsmodus, wobei im motorischen Betrieb, wie zuvor bereits beschrieben, Energie aus der Batterie entnommen, und im generatorischen Betrieb der elektrischen Maschine elektrische Energie dem elektrischen Speicher zugeführt wird.

Ein abruptes Umschalten zwischen motorischem und generatorischem Betrieb der elektrischen Maschine kann je nach Zeitdauer der einzelnen Betriebszustände spürbare Auswirkungen für den Fahrer haben, da die Kurbelwelle wechselnd ein zusätzliches beschleunigendes beziehungsweise bremsendes Moment erfährt. Um diese Auswirkungen zu minimieren und kein geändertes Gefühl für den Fahrer zu verursachen, kann durch eine weitere bevorzugte Ausgestaltung des Verfahrens statt eines plötzlichen Umschaltens der Betriebspunkte eine kontinuierliche Veränderung des aufgebrachten beziehungsweise abgenommenen Drehmoments durch die elektrische Maschine erfolgen. Hierfür wird die Ansteuerung der elektrischen Maschine derart gewählt, dass die aufgenommene beziehungsweise abgegebene elektrische Leistung kontinuierlich erhöht beziehungsweise gesenkt wird.

In einer weiteren erfindungsgemäßen Ausgestaltung des Verfahrens wird beziehungsweise werden der erste Sollwert und/oder der weitere Sollwert des elektrischen Speichers abhängig zur Drehzahl der elektrischen Maschine vorgegeben. Durch die Vorgabe von Maschinenparametern für die Einstellung der Sollwerte für den elektrischen Speicher, kann auf besonders einfache Weise die in der elektrischen Maschine zur Verfügung stehende Energie, die von der Drehzahl abhängt, bei dem Ladevorgang des elektrischen Speichers oder bei der motorischen Unterstützung der Brennkraftmaschine berücksichtigt werden. Zudem kann verhindert werden, dass im Falle einer zu niedrigen Drehzahl der elektrischen Maschine und damit der Brennkraftmaschine durch eine etwaige Ladeanforderung der Batterie, die Brennkraftmaschine durch die elektrische Maschine im generatorischen Betrieb zu stark mit einem Bremsmoment beaufschlagt wird, so dass der Betrieb der Brennkraftmaschine gestört werden kann oder sogar zum Erliegen kommt.

In einer weiteren bevorzugten Ausgestaltung des Verfahrens, wird beziehungsweise werden der erste Sollwert und/oder der weitere Sollwert des elektrischen Speichers abhängig von zumindest einem Arbeitspunkt und/oder einem Betriebszustand und/oder der Drehzahl der Brennkraftmaschine vorgegeben.

Als Arbeitspunkt wird allgemein der Punkt innerhalb eines Arbeitsspiels insbesondere eines Zylinders der Brennkraftmaschine umschrieben, wobei ein vollständiges Arbeitsspiel je nach Brennkraftmaschine zumindest einen Kompressions- und einen Expansionstakt umfassen. Ein Betriebszustand der Brennkraftmaschine umfasst hierbei die typischen Fahrzustände einer Brennkraftmaschine. Diese umfassen insbesondere den Lastzustand, bei dem die Brennkraftmaschine permanent belastet wird, den Schubbetrieb, bei dem die Brennkraftmaschine durch den Schluss des Antriebsstrangs im Wesentlichen von einem äußeren Energieeintrag getrieben wird oder zum Beispiel den Leerlauf, bei dem die Brennkraftmaschine im Wesentlichen ohne Abgabe eines äußeren Drehmoments betrieben wird.

Bezüglich der Arbeitsspiele und der Drehzahl der elektrischen Maschine bzw. der Brennkraftmaschine kann der erste bzw. der zweite Sollwert entsprechend gewählt werden, um einen besonders gleichförmigen Betrieb der Brennkraftmaschine zu gewährleisten. Hierbei wird insbesondere der motorische bzw. generatorische Betrieb der elektrischen Maschine derart genutzt, um betriebsbedingte Schwankungen der Brennkraftmaschine entsprechend auszugleichen. Bedingt durch den Betrieb der Brennkraftmaschine gibt diese ihr Drehmoment immer impulsartig ab, wobei eine entsprechende Drehzahlungleichförmigkeit im Betrieb der Brennkraftmaschine auftritt. Diese kann durch entsprechende Regelung und Wahl der Sollwerte des elektrischen Speichers entsprechend derart ausgeglichen werden, dass zum einen die Drehzahlschwankungen geglättet und zum anderen eine entsprechende Laderegelung eines elektrischen Speichers gewährleistet werden kann. Das Gleiche gilt für die Betriebszustände der Brennkraftmaschine, wobei insbesondere bei einem Lastbetrieb die elektrische Maschine vorzugsweise motorisch betrieben werden kann, wodurch die Brennkraftmaschine unterstützt wird. Zudem kann beispielsweise in einem Schubbetrieb, bei dem ein externer Drehmomenteintrag auf die Brennkraftmaschine wirkt, dieser genutzt werden, um die hierdurch gewonnene kinetische Energie, sofern dies der Ladezustand des elektrischen Speichers zulässt, mittels der elektrischen Maschine im generatorischen Betriebszustand in den elektrischen Speichers zu überführen. Im Leerlauf kann die elektrische Maschine durch den Laderegler derart angesteuert werden, dass im Arbeitsspiel des Kompressionstaktes der bzw. die Zylinder der Brennkraftmaschine entsprechend motorisch unterstützt werden, wobei nach der Zündung und Expansion des Brennstoff-Luftgemisches ein generatorischer Betrieb den impulsartigen Drehmoment- und Drehzahlanstieg der Brennkraftmaschine entsprechend glätten kann, wodurch die hieraus gewonnene kinetische Energie in elektrische Energie gewandelt, und diese im elektrischen Speicher gespeichert werden kann. Neben dem Vorteil der Glättung des Drehmomenten- und/oder Drehzahlverlaufs, kann durch diesen Betrieb auch erreicht werden, dass das Umschalten zwischen motorischem und generatorischem Betrieb der elektrischen Maschinen ohne spürbaren Effekt für den Fahrer geschieht.

In einer weiteren bevorzugten Ausgestaltung können neben der Minderung der Drehungleichförmigkeit innerhalb eines Arbeitsspiels der Brennkraftmaschine durch eine geeignete Ansteuerung der elektrischen Maschine auch Unterschiede zwischen verschiedenen Arbeitsspielen ausgeglichen werden. Vor allem bei geringen Füllmengen des Zylinders, zum Beispiel im Leerlauf der Brennkraftmaschine, können Schwankungen in der Qualität der Verbrennungen auftreten. Daraus resultieren unterschiedlich starke Drehzahlhübe für verschiedene Arbeitsspiele. Um diese Schwankungen auszugleichen, kann die elektrische Maschine insbesondere bei unterdurchschnittlich schwachen Verbrennungen durch motorischen Betrieb die Drehzahl der Kurbelwelle erhöhen beziehungsweise bei überdurchschnittlichen starken Verbrennungen durch generatorischen Betrieb die Kurbelwelle abbremsen. Somit kann eine Angleichung der verschiedenen Arbeitsspiele aneinander realisiert werden und ein ruhigerer Lauf des Gesamtsystems ermöglicht werden. Vor dem Hintergrund dieser Zielvorgaben kann die elektrische Maschine entsprechend angesteuert werden, bzw. das Ansteuerverfahren für die elektrische Maschine entsprechend angepasst werden.

In einer weiteren bevorzugten Ausgestaltung des Verfahrens wird zumindest ein Wert, der jeweils einmal pro Umdrehung des Rotors der elektrischen Maschine auftritt und mit zumindest einer aufsteigenden Flanke des Phasensignals, einer abfallenden Flanke des Phasensignals oder einem Nulldurchgang des Phasensignals assoziiert erfasst, wobei die elektrische Maschine durch den Laderegler nach dem Auftreten des zumindest einen Werts motorisch oder generatorisch betrieben wird. Durch ein Erfassen dieses Wertes, der mit einer aufsteigenden Flanke des Phasensignals oder einer abfallenden Flanke des Phasensignals mit einem Nulldurchgang des Phasensignals assoziiert ist, kann auf eine Drehwinkelposition des Rotors der elektrischen Maschine bzw. dessen Drehzahl zurückgeschlossen werden. Durch die feste Kopplung der elektrischen Maschine mit der Kurbelwelle der Brennkraftmaschine lässt sich somit auch die Kurbelwellenposition aus der Drehwinkellage des Rotors bzw. die Drehzahl der Kurbelwelle aus der Drehzahl des Rotors bestimmen. Die exakte Drehwinkellage des Rotors bzw. dessen Drehzahl ist aus einer unbelasteten elektrischen Maschine direkt aus der Leerlaufspannung der elektrischen Maschine ablesbar, da die relative Phasenlage der Leerlaufspannung mit der Drehwinkellage des Rotors übereinstimmt. Bei einer belasteten elektrischen Maschine, insbesondere bei einer belastenden generatorisch betriebenen elektrischen Maschine, ist die exakte Drehwinkellage des Rotors durch zusätzliche Berücksichtigung des Polradwinkels ermittelbar. Es ist daher vorteilhaft, vor einer motorischen bzw. generatorischen Beaufschlagung der elektrischen Maschine, die jeweiligen Werte zu bestimmen, anhand derer die Kurbelwellenposition bzw. die Drehzahl der elektrischen Maschine ermittelt wird, ohne durch eine jeweilige Belastung der elektrischen Maschine, diese Ermittelung nachteilig zu beeinflussen. Im Ergebnis kann somit verhindert werden, dass die charakteristischen Signale, die für eine Ermittlung der Drehzahl bzw. der Drehwinkellage des Rotors erforderlich sind, durch die Spannungsregelung des Speichers nachhaltig beeinträchtigt werden. Auf diese Weise lässt sich auf eine geschickte Art die Spannungsreglung von einer Ermittlung der charakteristischen Werte des Phasensignals, welche mit aufsteigenden und absteigenden Flanken oder Nulldurchgängen des Phasensignals assoziiert werden, zeitlich getrennt werden, wodurch eine Spannungsregelung als auch eine Ermittlung von Sekundärgrößen, wie der Drehwinkellage des Rotors als auch der Drehzahl des Rotors aus den Phasensignalen, woraus durch die direkte Kopplung mit der Brennkraftmaschine auch die Drehzahl der Kurbelwelle sowie die Drehwinkelposition der Kurbelwelle ermittelbar sind, gewonnen werden.

In einer weiteren bevorzugten Ausführungsform des Verfahrens wird der motorische oder generatorische Betrieb der elektrischen Maschine abhängig von zumindest einer Drehwinkellage des Rotors durchgeführt. Durch Kenntnis der absoluten Kurbelwelleninformation, kann der Laderegler in vorteilhafter Weise in gewissen Kurbelwellenbereichen die elektrische Maschine motorisch bzw. generatorisch betreiben. Hierdurch können Funktionen, die insbesondere eine hoch aufgelöste Drehzahl in gewissen Kurbelwellenbereichen benötigen, hierzu gehören insbesondere die Einspritzung bzw. die Zündung der Brennkraftmaschine, eine noch bessere Qualität der hoch aufgelösten Drehzahl zur Verfügung gestellt werden. In einer weiteren bevorzugten Ausführungsform des Verfahrens wird der motorische oder generatorische Betrieb der elektrischen Maschine nach Auftreten des zumindest einen Werts solange aufrechterhalten, bis zumindest ein weiterer Wert, der mit einer nachfolgenden aufsteigenden Flanke des Phasensignals, abfallenden Flanke des Phasensignals oder einem Nulldurchgang des Phasensignals assoziiert ist, erkannt wird. Hierbei ist von Vorteil, dass durch das Erkennen eines ersten Werts, der mit einer aufsteigenden Flanke des Phasensignals oder der abfallenden Flanke des Phasensignals bzw. eines Nulldurchgangs des Phasensignals assoziiert ist, ein entsprechender Trigger erfolgen kann, durch den die Bestimmung der Drehwinkellage bzw. der Drehzahl des Rotors der elektrischen Maschine ermittelt wird. Hierbei kann es weiter bevorzugt sein, den Regeleingriff der elektrischen Maschine zum generatorischen oder motorischen Regeln der elektrischen Maschine zwischen zwei benachbarte Werte, vorzugsweise zwischen zwei unmittelbar benachbarte Werte zu positionieren. Hierdurch kann sichergestellt werden, dass zum Einen eine notwendige Laderegelung des elektrischen Speichers durch einen motorischen bzw. generatorischen Betrieb der elektrischen Maschine erfolgen kann, als auch dass eine entsprechende Flanken bzw. Nulldurchgangerkennung, die mit den jeweiligen charakteristischen Werten assoziiert sind, nicht gestört wird. Hierdurch kann eine sichere Ermittlung der Drehwinkellage bzw. der Drehzahl des Rotors gewährleistet werden.

In einer weiteren bevorzugten Ausführungsform des Verfahrens wird ein Schaltvorgang des Ladereglers zum motorischen oder generatorischen Betrieb der elektrischen Maschine eingeleitet, wenn zumindest ein zeitlicher Mindestabstand zu zumindest einem Wert, der mit einer aufsteigenden Flanke des Phasensignals, einer abfallenden Flanke des Phasensignals oder einem Nulldurchgang des Phasensignals assoziiert ist, besteht.

Durch die Einführung eines zeitlichen Mindestabstands zur nächstfolgenden Flanke, kann gewährleistet werden, dass sich das Gesamtsystem zum Zeitpunkt des Messeingriffs nicht mehr in einem transienten sondern in einem stationären Zustand befindet, wodurch die Messung der Flanken bzw. der Nulldurchgänge und hieraus die Ermittlung der Drehwinkellage des Rotors bzw. dessen Drehzahl mit einer noch höheren Präzision ermittelbar ist. Typische zeitliche Mindestabstände bewegen sich in einem Zeitintervall von ca. 100 µs bis 1 ms.

In einer weiteren bevorzugten Ausgestaltung des Verfahrens wird ein Schaltvorgang des Ladereglers zum motorischen oder generatorischen Betrieb der elektrischen Maschine zeitverzögert nach Erkennen eines Wertes eingeleitet. Hierbei ist vorteilhaft, dass die Zeitverzögerung dazu genutzt werden kann, um eine Plausibilisierung der mit den Flanken bzw. Nulldurchgängen assoziierten Werte vorzunehmen. Hierdurch können Artefakte im Signal, wie zum Beispiel das sogenannte Signalprellen ausgeschlossen werden. Die Zeitverzögerung kann ggf. mit der Drehzahl variiert werden, um ausreichend Rechenzeit zu gewährleisten. Typische zeitliche Verzögerungen bewegen sich in einem Zeitintervall von ca. 100 µs bis 1 ms.

In einer bevorzugten Ausgestaltung des Verfahrens wird auf einer Recheneinheit in einem ersten Modus das Auftreten eines ersten Wertes erkannt, wobei nach Erkennen des Werts aus dem ersten Modus in einen weiteren Modus gewechselt wird, in dem ein motorischer oder generatorischer Betrieb der elektrischen Maschine eingeleitet wird. Ein direktes Springen von dem ersten Modus in den weiteren Modus, sogenannter Interrupt, bietet den Vorteil, dass ein möglichst flankensynchrones Schalten ermöglicht wird. Damit ist die Einschwingzeit zur nächsten Flanke sicher gewährleistet und gleichzeitig die Implementierung in einer Recheneinheit sehr recheneffizient.

In einer weiteren bevorzugten Ausgestaltung des Verfahrens wird die elektrische Maschine durch den Laderegler zum motorischen oder generatorischen Betrieb der elektrischen Maschine, vorzugsweise nach Auftreten des zumindest einen Werts, zeitlich getaktet, vorzugsweise mittels Puls-Weiten-Modulation (PWM) getaktet, betrieben. Eine getaktete Regelung der elektrischen Maschine durch den Laderegler ist vorteilhaft, da hierdurch eine gewünschte Zielspannung des elektrischen Speichers sicher einstellbar ist. Durch eine entsprechende Anpassung der Pulsbreiten bzw. deren Zeitanfänge und deren Endpunkte kann bei einer Wahl der Ansteuermodi (generatorisch oder motorisch) die Zuführung bzw. die Entnahme von Energie aus der Batterie bestmöglich auf die vorliegenden Gegebenheiten (Beladungszustand der Batterie, Betriebssituation der Brennkraftmaschine, Verbrauch von elektrischen Komponenten im Bordnetz etc.) angepasst werden. Des Weiteren können die entsprechenden Takte einer generatorischen bzw. motorischen Beaufschlagung der elektrischen Maschine sicher zwischen den jeweiligen Triggerwerten zur Bestimmung der Drehwinkelposition bzw. der Drehzahl der elektrischen Maschine positioniert werden, wodurch einerseits eine sichere Laderegelung und andererseits eine exakte Erkennung der Flanken und hieraus eine sicher Ermittlung der Drehzahl bzw. der Drehwinkelposition der Rotors stets gewährleistet werden kann.

In einer noch weiteren bevorzugten Ausgestaltung des Verfahrens wird die zeitliche Taktung derart gewählt, dass die Betriebsspannung des elektrischen Speichers zwischen dem ersten Sollwert und dem weiteren Sollwert liegt, vorzugsweise einen konstanten Wert annimmt. Durch eine entsprechende Wahl der Taktfrequenz, die typischerweise 10, 20 oder 100 kHZ beträgt, und einer Wahl der jeweiligen Pulsbreiten und/oder deren zeitlichen Anfängen und/oder Endpunkten des Regelsignals, insbesondere eines Signals einer Puls-Weiten-Modulation, kann die Betriebsspannung des elektrischen Speichers nahezu beliebig eingestellt werden. Andererseits kann die Lage der Pulse derart gewählt werden, dass keine zeitliche Überlappung mit den charakteristischen Werten des Phasensignals, die für eine Ermittlung der jeweilig aufsteigenden und abfallenden Flanke des jeweiligen Phasensignals erforderlich sind, besteht. Im Übrigen ist die Zeitkonstante einer pulsweitenmodulierten Regelung in der Regel deutlich kleiner, als die Zeitkonstante einer elektrischen Maschine. Damit ist der Zeitpunkt des Schaltens in Relation zur Ermittlung der jeweiligen Werte nicht mehr von großer Bedeutung und es muss keine Beachtung des Phasensignals für die Schaltvorgänge erfolgen.

Es ist weiter vorteilhaft, wenn die Taktfrequenz der getakteten generatorischen und/oder motorischen Beaufschlagung der elektrischen Maschine außerhalb des menschlichen Hörspektrums liegt. Hierbei sind insbesondere Frequenzen von größer 50 kHz bevorzugt.

In einer weiteren bevorzugten Ausgestaltung der Erfindung wird das zumindest eine Phasensignal der elektrischen Maschine mittels einer elektronischen Schaltung, insbesondere einem Motorsteuergerät verarbeitet. Durch eine entsprechende Verarbeitung des Phasensignals beziehungsweise, der damit verbundenen Werte und assoziierten aufsteigenden Flanken, absteigenden Flanken und Nulldurchgängen des Phasensignals sowie eine Regelung, insbesondere eine Laderegelung des elektrischen Speichers in einem Motorsteuergerät, kann auf zusätzliche Steuerkomponenten verzichtet werden, da das Motorsteuergerät ohnehin vorhanden ist, und auch für diesen Einsatz grundsätzlich nutzbar ist. Dies ist vorteilhaft, da hierdurch eine entsprechende Regelarchitektur vereinfacht werden kann, wodurch zusätzliche Kosten eingespart werden können.

Grundsätzlich versteht sich, dass durch das zuvor beschriebene Verfahren sowohl eine energetisch besonders effiziente Spannungsregelung des elektrischen Speichers erfolgen kann, aber auch direkt aus den internen Signalen der elektrischen Maschine eine hochaufgelöste Drehwinkelposition bzw. Drehzahl des Rotors ermittelbar ist und aufgrund der festen Kopplung des Rotors der elektrischen Maschine mit der Kurbelwelle der Brennkraftmaschine auch die Drehwinkelposition und Drehzahl der Kurbelwelle mit einer entsprechend hohen Genauigkeit ermittelbar ist. Somit kann grundsätzlich auf ein entsprechendes Geberrad und eine daran angeordnete Sensorik zur Bestimmung der Drehwinkellage bzw. der Drehzahl des Rotors verzichtet werden. Eine Ermittlung der Drehwinkelposition bzw. der Drehzahl des Rotors ist im laufenden Betrieb der elektrischen Maschine bzw. der Brennkraftmaschine stets möglich, da eine entsprechende Laderegelung des elektrischen Speichers zeitlich von der Ermittlung der Flanken bzw. Nulldurchgänge des Phasensignals getrennt sind, welche für eine Ermittlung der Drehwinkelposition bzw. Drehzahl erforderlich sind. Hierdurch können Kosten eingespart werden, was insbesondere in Bezug auf kostengünstigere motorisch betriebene Zweiräder bzw. Leichtkrafträder von Vorteil ist. Zudem können Steuerfunktionen, wie zum Beispiel die Positionsberechnung der Einspritzung, Drehmomentberechnung bzw. Lernfunktion zur genauen Bestimmung der OT-Lage und dergleichen deutlich verbessert werden.

In einer weiteren bevorzugen Ausführungsform des Verfahrens wird die Drehwinkelposition bzw. die Drehzahl des Rotors bzw. der Kurbelwelle zur Steuerung der Brennkraftmaschine verwendet. Eine Erfassung und Verarbeitung der Phasensignale der elektrischen Maschine durch das Motorsteuergerät und eine entsprechende Ermittlung der Drehwinkelposition bzw. der Drehzahl der Kurbelwelle aus der Drehwinkellage des Rotors und einem etwaigen Winkelversatz, gegeben durch den Polradwinkel, kann entsprechend zur Steuerung des Zündzeitpunkts bzw. des Drehmoments der Brennkraftmaschine im Steuergerät der Brennkraftmaschine herangezogen werden. Somit kann eine Laderegelung der Batterie, eine Steuerung der Brennkraftmaschine und eine verbesserte Ermittlung der Drehwinkellage bzw. Drehzahl der Kurbelwelle im Motorsteuergerät zusammengefasst werden, wodurch sich weitere Synergieeffekte ergeben. Hierfür weist die verwendete Recheneinheit, die vorzugsweise als Motorsteuergerät für die Brennkraftmaschine ausgebildet ist, eine entsprechende integrierte Schaltung und/oder ein auf einem Speicher gespeichertes Computerprogramm auf, die bzw. das zur Durchführung der zuvor beschriebenen Verfahrensschritte eingerichtet ist bzw. sind.

Die Implementierung des Verfahrens in Form eine Computerprogramms, das vorzugsweise auf einem Datenträger, insbesondere einem Speicher in Form von Software gespeichert ist, und in der Recheneinheit zur Ausführung des Verfahrens zur Verfügung steht bzw. das Vorsehen einer integrierten Schaltung, insbesondere eines ASIC (Anwendungsspezifischer integrierter Schaltkreis), ist vorteilhaft, da dies besonders geringe Kosten verursacht, insbesondere dann, wenn ein ausführendes Steuergerät noch für weitere Aufgaben genutzt wird und daher ohnehin bereits vorhanden ist. Geeignete Datenträger zur Bereitstellung des Computerprogramms sind insbesondere magnetische, optische und elektrische Speicher, wie sie vielfach aus dem Stand der Technik bekannt sind.

Eine bevorzugte elektrische Maschine, die mittels des zuvor beschriebenen Verfahrens motorisch und/oder generatorisch angesteuert wird, weist einen Stromrichter mit aktiven Schaltelementen, vorzugsweise Transistoren, insbesondere MOSFETS (Metall-Oxid-Halbleiter-Feldeffekttransistor) auf, wodurch durch eine entsprechende Beschaltung der Transistoren sowohl ein motorischer bzw. ein generatorischer Betrieb der elektrischen Maschine, durch Ansteuerung durch den Laderegler bzw. durch eine sonstige übergeordnete Regeleinrichtung, erfolgen kann.

Durch die Möglichkeit, die elektrische Maschine auch motorisch betreiben zu können, lassen sich weitere Funktionen des Gesamtsystems realisieren. Besonders bei kleinen Ein-Zylinder-Brennkraftmaschinen steht häufig ein geringes Drehmoment für niedrige Drehzahlen, speziell die Leerlaufdrehzahl der Brennkraftmaschine, zur Verfügung. Unterstützt man die Brennkraftmaschine durch die elektrische Maschine im motorischen Betrieb beim Anfahren aus dem Stand, kann eine deutliche Verbesserung des Anfahrverhaltens erzielt und damit der Fahrkomfort bzw. Fahrspaß für den Fahrer erhöht werden.

Ist die elektrische Maschine für niedrige Drehzahlen in der Lage, ein ausreichend hohes Drehmoment zu stellen, kann die Funktion des Anlassers durch die elektrische Maschine im motorischen Betrieb realisiert werden. Dadurch lässt sich die Anlasser-Komponente einsparen und damit die Systemkosten und der Bauraum reduzieren. Eine entsprechende Realisierung des Antriebstrangs vorausgesetzt, kann die elektrische Maschine im motorischen Betrieb dazu verwendet werden, den Fahrer beim Schieben des Fahrzeugs zu unterstützen.

Während eines Schaltvorgangs im Getriebe wird üblicherweise die Welle zur Brennkraftmaschine mit Hilfe einer Kupplung abgekoppelt. Nach Einlegen des neuen Gangs besteht üblicherweise vor dem Schließen der Kupplung ein Drehzahlunterschied zwischen getriebeseitiger und motorseitiger Kupplungshälfte.

Dieser wird während des Schließvorgangs durch die Reibung der beiden Kupplungshälften aneinander angeglichen. Der damit verbundene Verschleiß der Kupplungsbeläge kann reduziert werden, wenn zur Synchronisierung der Drehzahl eine Unterstützung der elektrischen Maschine die Drehzahl der Kurbelwelle und damit der motorseitigen Kupplungshälfte an die Getriebeseite angeglichen bzw. angenähert wird. Hierfür muss beim Schalten in einen höheren Gang die Motordrehzahl reduziert werden. Dies gilt in Relation zu dem Drehzahlniveau des vorherigen Gangs. Hierzu kann, soweit notwendig, die elektrische Maschine als Generator bremsend eingesetzt werden.

Umgekehrt muss die Motordrehzahl erhöht werden, wenn ein niedrigerer Gang eingelegt wird. Hierzu kann die elektrische Maschine als motorische Unterstützung eingesetzt werden.

In einer weiteren bevorzugten Ausgestaltung des Verfahrens werden für die Planung der Umschaltzeitpunkte zwischen motorischem und generatorischem Betrieb der elektrischen Maschine, sowie für die Planung des Ladezustandes des elektrischen Speichers Informationen über in naher Zukunft auftretende Verkehrssituation und/oder Fahrprofile berücksichtigt. Diese Informationen können aus entsprechenden Karten und der Information über den aktuellen Ort, sowie aus aktuellen Verkehrsinformationen im näheren Umfeld, die über geeignete Kommunikationsmittel empfangen werden, gewonnen werden.

Weitere Ausgestaltungen der Erfindung ergeben sich aus der nachfolgenden Beschreibung sowie den beiliegenden Zeichnungen.

Kurze Beschreibung der Zeichnung(en)

Figur 1
zeigt schematisch ein Geberrad mit Sensor, insbesondere zur Drehzahlbestimmung gemäß dem Stand der Technik;

Figuren 2a bis c
zeigen eine schematische Darstellung einer an eine Brennkraftmaschine gekoppelten elektrischen Maschine (a, b), und die dazugehörigen Signalverläufe (c);

Figur 3
zeigt schematisch eine elektrische Maschine, mit den entsprechenden zugehörigen Phasensignalen;

Figur 4a und 4b
zeigen mögliche Spannungsverläufe der Phasen einer dreiphasigen elektrischen Maschine;

Figur 5a und 5b
zeigen ein einphasiges vereinfachtes Ersatzschaltbild einer elektrischen Maschine (a), sowie das dazugehörige Zeigerdiagramm der Phasenspannungsvektoren (b); und

Figur 6a bis 6d
zeigen mögliche Schaltzustände der elektrischen Maschine sowie mehrere alternative Ansteuerverfahren zur generatorischen und/oder motorischen Ansteuerung der elektrischen Maschine.

Ausführungsform(en) der Erfindung

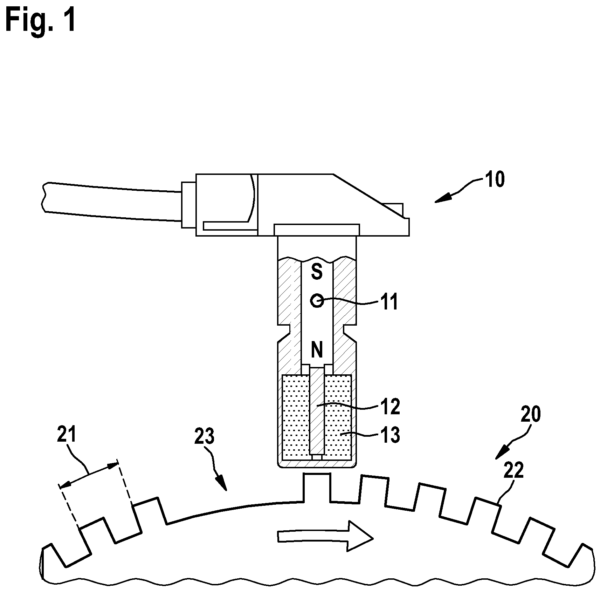

In Figur 1 sind schematisch ein Geberrad 20 und ein zugehöriger induktiver Sensor 10 dargestellt, wie sie im Stand der Technik zur Drehzahlbestimmung bzw. zur näherungsweisen Ermittlung der Drehwinkelposition der Kurbelwelle benutzt werden. Das Geberrad 20 ist dabei fest mit einer Kurbelwelle einer Brennkraftmaschine verbunden und der Sensor 10 ist ortsfest an einer geeigneten Stelle angebracht.

Das Geberrad 20, üblicherweise aus einem ferromagnetischen Material, weist Zähne 22 auf, die an der Außenseite mit einem Abstand 21 zwischen zwei Zähnen 22 angeordnet sind. An einer Stelle auf der Außenseite weist das Geberrad 20 eine Lücke 23 in der Länge einer vorbestimmten Anzahl von Zähnen auf.

Diese Lücke 23 dient als Bezugsmarke zur Erkennung einer absoluten Position des Geberrads 20.

Der Sensor 10 weist einen Stabmagnet 11 auf, an welchem ein weichmagnetischer Polstift 12 angebracht ist. Der Polstift 12 wiederum ist von einer Induktionsspule 13 umgeben. Bei Rotation des Geberrads laufen abwechselnd Zähne 22 und zwischen jeweils zwei Zähnen liegende Leerräume an der Induktionsspule 13 des Sensors 10 vorbei. Da das Geberrad und somit auch die Zähne 22 aus einem ferromagnetischen Material sind, wird bei der Rotation in der Spule ein Signal induziert, womit zwischen einem Zahn 22 und einem Luftspalt unterschieden werden kann.

Durch Korrelation einer Zeitdifferenz zwischen zwei Zähnen mit einem Winkel, den diese zwei Zähne einschließen, können die Winkelgeschwindigkeit bzw. die Drehzahl und darüber hinaus auch die entsprechende Winkelposition der Kurbelwelle näherungsweise berechnet werden.

An der Lücke 23 weist das induzierte Signal in der Induktionsspule einen anderen Verlauf auf, als bei den ansonsten sich mit Leerräumen abwechselnden Zähnen 22. Auf diese Art ist eine absolute Positionsmarke, jedoch nur in Bezug auf eine volle Kurbelwellenumdrehung, möglich.

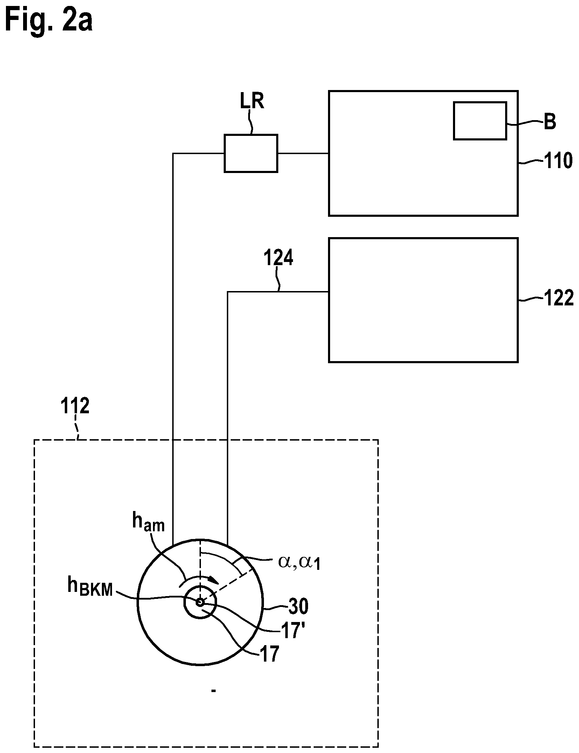

In Figur 2a ist eine Brennkraftmaschine 112 abgebildet, an die direkt oder übersetzt gekoppelt eine elektrische Maschine 30 angebunden ist, wobei die elektrische Maschine 30 durch die Kurbelwelle 17' der Brennkraftmaschine 112 angetrieben wird. Somit weist die Drehzahl $n_{Gen}$ der elektrischen Maschine 130 und die Drehzahl $n_{BKM}$ der Kurbelwelle 17' sowie die Winkelposition $\alpha_1$ des Rotors der elektrischen Maschine 30 und die Drehwinkelposition $\alpha$ der Kurbelwelle 17' ein festes Verhältnis zueinander auf. Der elektrischen Maschine 30 ist zudem ein Laderegler LR zugeordnet, der die Batterie B innerhalb des Bordnetzes 110, entsprechend der noch verbleibenden Kapazität der Batterie B, mit Energie versorgt. Des Weiteren ist eine Recheneinheit, insbesondere ein Motorsteuergerät 122 vorgesehen, das Daten über eine Kommunikationsverbindung 124 mit der elektrischen Maschine 30 bzw. mit der Brennkraftmaschine 112 austauscht und dazu eingerichtet ist, die Brennkraftmaschine 112 und die elektrische Maschine 30 entsprechend anzusteuern.

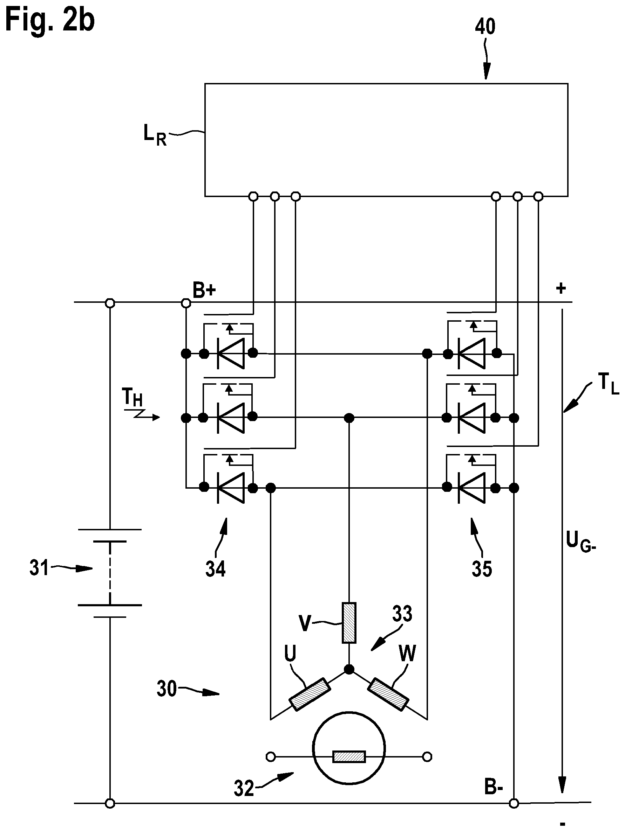

In Figur 2b ist die elektrische Maschine 30 nochmals in vergrößerter Form schematisch dargestellt. Die elektrische Maschine 30 weist einen eine Welle 17 aufweisenden Rotor 32 mit einer Erregerwicklung und einem Stator 33 mit Ständerwicklung auf. Es handelt sich daher um eine fremderregte Maschine, wie sie insbesondere bei Kraftfahrzeugen üblich ist. Insbesondere für Krafträder, insbesondere bei Klein- und Leichtkrafträdern, werden jedoch meist Motoren mit Permanentmagneten, d. h. permanenterregte elektrische Maschine eingesetzt. Im Rahmen der Erfindung können grundsätzlich beide Arten von elektrischen Maschinen verwendet werden, wobei insbesondere das erfindungsgemäße Verfahren nicht von der Verwendung der jeweiligen Art der elektrischen Maschine - permanenterregte elektrische Maschine oder fremderregte elektrische Maschine - abhängt.

Beispielhaft ist die elektrische Maschine 30 als Drehstromgenerator ausgebildet, in welcher drei zueinander um 120° phasenverschobenen Phasenspannungssignale induziert werden. Derartige Drehstromlichtmaschinen werden üblicherweise als Generatoren in modernen Kraftfahrzeugen verwendet und sind für die Durchführung eines erfindungsgemäßen Verfahrens geeignet. Im Rahmen der Erfindung können grundsätzlich alle elektrischen Maschinen unabhängig von der Anzahl ihrer Phasen verwendet werden, wobei insbesondere das erfindungsgemäße Verfahren nicht von der Verwendung der jeweiligen Art der elektrischen Maschine abhängt.

Die drei Phasen des Drehstromgenerators 30 sind mit U, V, W bezeichnet. Die Phasen U, V, W sind mit einem ersten Pfad 34, der pro Phase U, V, W jeweils einen Transistoren $T_H$ aufweist und mit einem zweiten Pfad 35, der pro Phase U, V, W jeweils einen weiteren Transistor $T_L$ aufweist, verbunden. Die jeweiligen Transistoren $T_H$, $T_L$ sind von der Steuereinheit 40 in Form eines Ladereglers LR jeweils entsprechend beaufschlagbar, so dass, in einer ersten Betriebssituation, eine Gleichrichtung der Phasenspannungen $U_U$, $U_V$, $U_W$ bewirkt werden kann (generatorischer Betrieb) oder, in einer weiteren Betriebssituation, die elektrische Maschine motorisch betreibbar ist. Durch einen bedarfsgerechten Wechsel zwischen dem generatorischen Betrieb der elektrischen Maschine 30, in dem der Batterie B elektrische Energie zugeführt wird und dem motorischen Betrieb der elektrischen Maschine 30, in dem der Batterie B elektrische Energie entnommen wird, wird die Laderegelung der der Batterie B innerhalb des Bordnetzes 110 bewirkt.

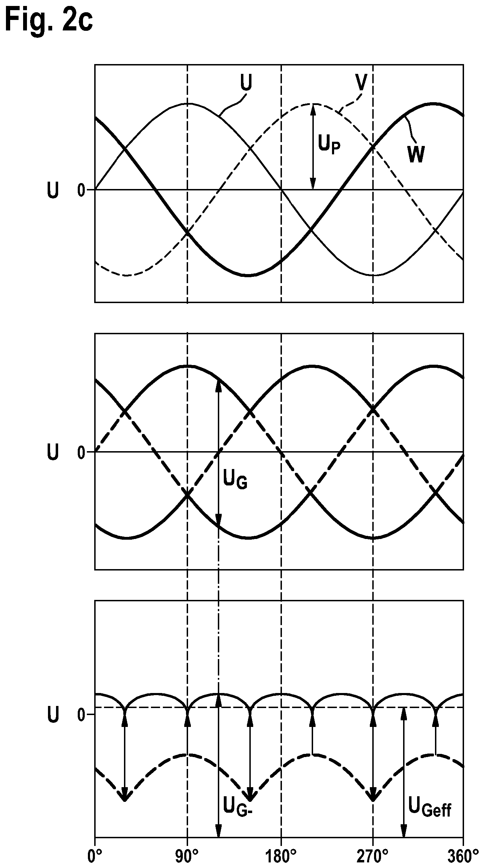

In Figur 2c sind drei Diagramme dargestellt, die die zugehörigen Spannungsverläufe gegenüber dem Drehwinkel des Rotors 32 der elektrischen Maschine 30 zeigen. Im oberen Diagramm sind die Spannungsverläufe an den Phasen U, V, W und die zugehörige Phasenspannung $U_P$ eingetragen. Allgemein versteht sich, dass die in diesem Diagramm und in den nachfolgenden Diagrammen angegebenen Zahlen und Wertebereiche lediglich exemplarisch sind, und daher die Erfindung im Grundsatz nicht beschränken. Ferner versteht sich, dass es sich bei einem Generator um die elektrische Maschine 30 handelt, die sich im generatorischen Betriebszustand befindet.

Im mittleren Diagramm ist die Generatorspannung $U_G$, die durch die Hüllkurven der positiven und negativen Halbwellen der Spannungsverläufe U, V, W gebildet wird, gezeigt.

Im unteren Diagramm ist schließlich die gleichgerichtete Generatorspannung $U_{G-}$ (vgl. Figur 2a), zusammen mit dem Effektivwert $U_{Geff}$ dieser Generatorspannung $U_{G-}$, die zwischen B+ und B- anliegen, gezeigt.

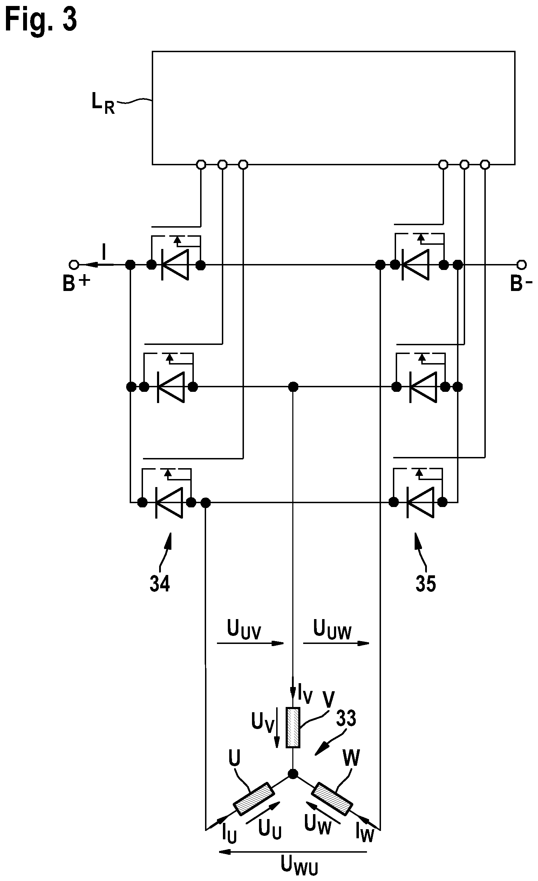

In Figur 3 ist schematisch der Stator 33 mit den Phasen U, V, W, sowie den Transistoren $T_H$, $T_L$ des ersten Pfads 34 und des weiteren Pfads 35 aus Figur 2b gezeigt. Die abgebildeten Stromrichterelemente in Form von Transistoren $T_H$, $T_L$ sind bevorzugt als MOSFETs (Metall-Oxid-Halbleiter-Feldeffekttransistor) ausgebildet. Diese weisen eine besonders geringe Verlustleistung auf. Zudem ist die im Folgenden benutzte Nomenklatur der auftretenden Spannungen und Ströme dargestellt.

$U_U$, $U_V$, $U_W$ bezeichnen alternativ die Phasenspannungen der zugehörigen Phasen U, V, W, wie sie zwischen einem Außenleiter und dem Sternpunkt des Stators 33 abfallen. $U_{UV}$, $U_{VW}$, $U_{WU}$, bezeichnen die Spannungen zwischen zwei Phasen bzw. deren zugehörigen Außenleitern.

$I_U$, $I_V$, $I_W$ bezeichnen die Phasenströme vom jeweiligen Außenleiter einer Phase U, V, W zum Sternpunkt. I bezeichnet den Gesamtstrom aller Phasen nach der Gleichrichtung.

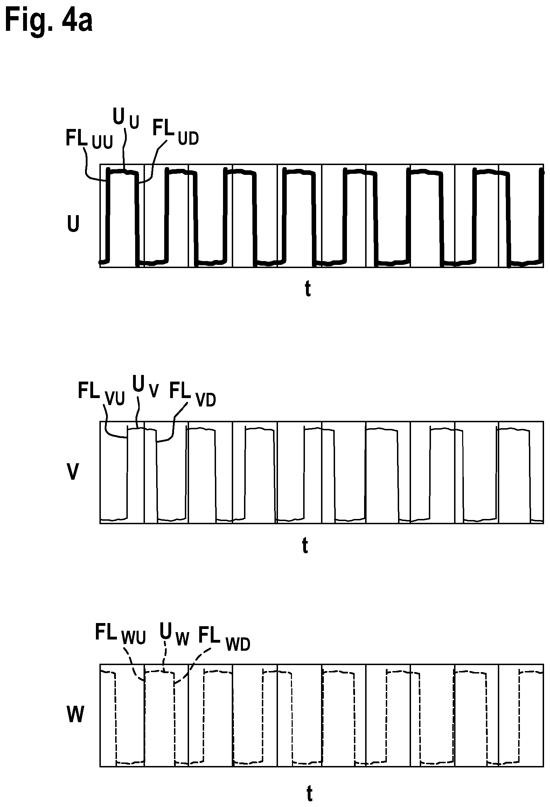

In Figur 4a sind nun drei Phasenspannungen $U_U$, $U_V$, $U_W$ mit Potential bezug auf B- in drei Diagrammen gegenüber der Zeit dargestellt, wie sie in einem Generator mit einem Außenpolläufer mit sechs Permanentmagneten auftreten. Diese Darstellung einer elektrischen Maschine 30, mit einer dreiphasigen Statorwicklung 33 ist lediglich beispielhaft zu sehen, wobei grundsätzlich, ohne Beschränkung der Allgemeinheit, das erfindungsgemäße Verfahren auch auf einem Generator mit einer entsprechend bedarfsgerechten Anzahl an Phasen oder Permanentmagneten oder Erreger-Spulen ausführbar ist. Ebenfalls können statt einer Stern-Verschaltung der Stator-Spulen auch eine Dreiecks-Verschaltung oder weitere Verschaltungsweisen gewählt werden.

Bei einer elektrischen Maschine 30 mit Stromabgabe, ist der Verlauf der Phasenspannungen $U_U$, $U_V$, $U_W$ in erster Näherung rechteckförmig. Dies erklärt sich insbesondere dadurch, dass durch die Generatorspannung entweder die Plus- oder die Minusdioden in Flussrichtung leiten, und daher entweder in etwa 15-16 Volt (Batterieladespannung bei 12V Bleisäure-Akkumulator und Spannung an Plusdioden), oder Minus 0,7-1 Volt (Spannung an Minusdioden), gemessen wird. Bezugspotential der Messung ist jeweils Masse. Es können auch andere Bezugspotentiale wie zum Beispiel der Sternpunkt des Stators gewählt werden. Diese ergeben abweichende Signalverläufe ändern jedoch nicht die auswertbaren Informationen, deren Gewinnung und Auswertung.

Grundsätzlich können die Phasensignale ($U_U$, $U_V$, $U_W$, $I_U$, $I_V$, $I_W$) auf verschiedene Weise gewonnen werden. Möglich ist beispielsweise eine Ermittlung der Phasenspannungen gegeneinander ($U_{UV}$, $U_{UW}$, $U_{WU}$), eine Ermittlung der Phasenspannungen über die Dioden eines angeschlossenen Gleichrichters gegen dessen Ausgangsklemmen (B+, B-), sofern der Stator der elektrischen Maschine in Sternschaltung mit abgreifbarem Sternpunkt ist, eine Betrachtung der Ausgangsspannung der Stränge gegen den Sternpunkt ($U_U$, $U_V$, $U_W$) oder eine vergleichbare Auswertung der Phasenströme.

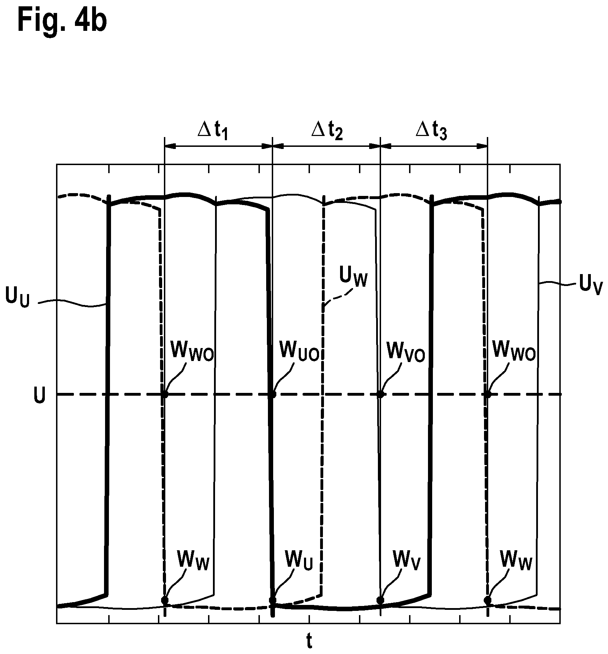

In Figur 4b sind die Phasenspannungen $U_U$, $U_V$, $U_W$ aus Figur 4a in einem Diagramm zusammen aufgetragen. Hierbei ist deutlich der gleichmäßige Phasenversatz zu erkennen.

Während einer vollen Umdrehung des Rotors 32 der elektrischen Maschine 30, werden die Spannungssignale durch sechs Magnete (insbesondere Permanentmagnete), die sogenannten Polpaare, sechs Mal wiederholt. Dementsprechend treten pro Phase, d. h. pro Phasenspannung $U_U$, $U_V$, $U_W$ pro Umdrehung des Rotors 32 sechs fallende Flanken $FL_D$ und sechs steigende Flanken $FL_U$ (für die jeweiligen Phasen $FL_{UU}$, $FL_{VU}$, $FL_{WU}$ und $FL_{UD}$, $FL_{VD}$, $FL_{WD}$) auf.

Diese Flanken legen einen Winkelabschnitt fest, nämlich genau den Winkelabschnitt, der durch die Magnete entlang des radialen Umfangs des Stators abgedeckt ist. Demnach lässt sich bei Erkennen der jeweiligen Flanken $FL_U$, bzw. $FL_D$, bei Kenntnis eines absoluten Bezugspunkts pro Umlauf, der beispielsweise anhand eines Referenzmagneten mit von den sonstigen Magneten abweichender Charakteristik der Phasenspannung $U_U$, $U_V$, $U_W$ gekennzeichnet ist, ermittelt werden.

Mit geeigneten Mitteln können nun sowohl die fallenden Flanken $FL_D$ als auch die steigenden Flanken $FL_U$ erkannt werden. Beispielsweise kann für jede Phasenspannung mittels eines sogenannten Schmitt-Triggers ein TTL-Signal generiert und an ein Steuergerät übermittelt werden. Die benötigten Schmitt-Trigger können entweder im Steuergerät oder in der Steuerelektronik, beispielsweise einem Steuergerät, einem Regler für die Batteriespannung und/oder im Fall eines aktiven Gleichrichters, im jeweiligen Generatorregler integriert oder diesen auch extern zugeordnet sein. Die einzelnen TTL-Signale können insbesondere für den Fall der Verwendung eines Steuergerät, insbesondere eines Motorsteuergeräts 122 (vgl. Figur 2a), über je eine Leitung, oder durch eine vorgelagerte Kombinationselektronik oder anderes geeignet zusammengefasst, über nur eine Datenleitung 124 (vgl. Figur 2a) übermittelt werden.

In Figur 4b sind den Enden der jeweiligen fallenden Flanken der Phasenspannung $U_U$, $U_V$, $U_W$ jeweils Werte $W_U$, $W_V$, $W_W$ zugeordnet, die auch als $W_{Ud}$, $W_{Vd}$, $W_{Wd}$ bezeichnet werden. Gleichermaßen können auch den steigenden Flanken $FL_U$ entsprechende Werte $W_{Uu}$, $W_{Vu}$, $W_{Wu}$ zugeordnet werden. Auch den Nulldurchgängen der Phasenspannungen können entsprechende Werte $W_{U0}$, $W_{V0}$, $W_{W0}$ zugeordnet sein. Diese Werte können der Erkennung einer Drehwinkellage $\alpha_1$ des Rotors 32 bzw. einem durch die Polpaare des Stators 33 festgelegten Winkelinkrements dienen. Auch eine Erkennung der Drehwinkellage $\alpha_1$ des Rotors 32 anhand der Plateaubereiche der Phasensignale oder anderen Bereichen dazwischen ist möglich. Gleichermaßen können die Werte auch dazu genutzt werden, anhand von Zeitdifferenzen $\Delta t_1$, $\Delta t_2$, $\Delta t_3$, die Drehzahl des Generators zu ermitteln.

Hierbei treten bei einer gleichmäßigen Anordnung der sechs Permanentmagnete in der elektrischen Maschine 30, insgesamt 18 fallende Flanken FLd und somit 18 zugehörige Werte pro Umdrehung in jeweils gleichen Abständen zueinander auf. Während eine Zeitdifferenz $\Delta t_1$, $\Delta t_2$, oder $\Delta t_3$ wird somit ein Winkel 360° / 18 = 20° überstrichen. Wie bereits eingangs erwähnt, kann dies auch zur Erkennung der Drehwinkellage $\alpha_1$ des Rotors 32 herangezogen werden, wobei die beispielhaft ermittelten 20° das detektierbare Winkelinkrement darstellt. Zudem lässt sich hieraus auch die Winkelgeschwindigkeit $\omega_i$ ermitteln. Diese ergibt sich aus $\omega_i =$ 20°/$\Delta t_i$ und die dazugehörige Drehzahl $n_i$ aus $n_i = \omega_i/360° \cdot 60$s/min in Umdrehungen pro Minute.

Es versteht sich grundsätzlich, dass alternativ zu den fallenden Flanken $FL_D$ auch die steigenden Flanken zur Ermittlung der Drehwinkellage $\alpha_1$ des Rotors 32 als auch zur Ermittlung der Momentandrehzahl $n_{Gen}$ der elektrischen Maschine 30 verwendbar sind. Durch die doppelte Anzahl an Werten pro Umdrehung, ergibt sich dementsprechend eine höhere Auflösung, sowohl der Drehwinkellage $\alpha_1$ des Rotors 32, als auch der Drehzahl $n_{Gen}$. Zudem können die Flanken der Phasen auf vielfältige weitere Art und Weise ausgewertet werden, beispielsweise durch die zeitlichen Abstände der steigenden Flanken $FL_U$ und fallenden Flanken $FL_D$ jeweils der gleichen Phasen oder von den jeweiligen Phasen zueinander oder durch den zeitlichen Abstand von steigenden Flanken $FL_U$ bzw. fallenden Flanken $FL_D$ der gleich Phase, oder aller Phasen zusammen.

Neben den aufsteigenden Flanken $FL_U$ und abfallenden Flanken $FL_D$ können für eine verbesserte Auflösung der Ermittlung der Drehwinkellage $\alpha_1$ des Rotors 32 bzw. einer Drehzahlerkennung $n_{Gen}$, auch die Nulldurchgänge der Phasensignale $U_U$, $U_V$, $U_W$ herangezogen werden.

Die tatsächliche Drehwinkellage $\alpha_1$ des Rotors 32 und dessen Welle 17 und damit die Drehwinkelposition $\alpha$ der Kurbelwelle 17', lassen sich aus den elektrischen Signalen der elektrischen Maschine 30, insbesondere den Phasensignalen $U_U$, $U_V$, $U_W$, bzw. den dazugehörigen Phasenströmen $I_U$, $I_V$, $I_W$ lediglich mit unzureichender Genauigkeit bestimmen, da im Falle einer belasteten elektrischen Maschine 30 infolge des Stromflusses, es zu einem systematischen Fehler in Form eines Winkelversatzes zwischen der Phasenlage der Phasensignale $U_U$, $U_V$, $U_W$, bzw. $I_U$, $I_V$, $I_W$ und der tatsächlichen Drehwinkellage $\alpha_1$ des Rotors 32 kommt. Dies wird in den nachfolgenden Abbildungen näher erläutert.

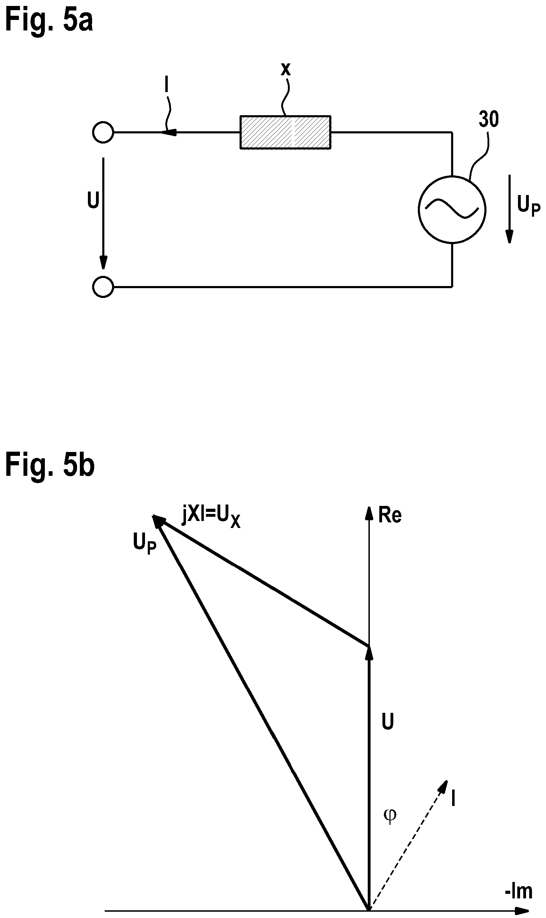

In Figur 5a ist eine schematische Darstellung eines einphasigen vereinfachten Ersatzschaltbilds einer elektrischen Maschine gezeigt, und in Figur 5b ist entsprechend die Beziehung zwischen den einzelnen Spannungen bzw. Strömen und deren relativer Phasenversatz zueinander in einem Zeigerdiagramm dargestellt. Die aus diesem Einphasenersatzschaltbild ermittelten Erkenntnisse lassen sich grundsätzlich auch auf eine mehrphasige elektrische Maschine, wie sie beispielsweise in der vorangegangenen Beschreibung gezeigt ist, übertragen. Aus dem einphasigen Ersatzschaltbild der elektrischen Maschine aus Figur 5 a) und dem zugehörigen, in Figur 5 b) gezeigten Zeigerdiagramm, lässt sich eine Spannungsgleichung für eine belastete elektrische Maschine herleiten, diese lautet wie folgt:

$$U_P = jX * I + U,$$

wobei U der Ausgangsspannung der elektrischen Maschine 30, $U_P$ der Leerlaufspannung der elektrischen Maschine ohne Belastung und I * jX dem Spannungsabfall $U_X$, der aufgrund des Stromflusses durch die elektrische Maschine und aufgrund der Reaktanz X der elektrischen Maschine im Generator abfällt, entspricht.

Hierbei entspricht die Leerlaufspannung $U_P$ der elektrischen Maschine 30, der idealen induzierten Spannung, die mit der Drehwinkellage $\alpha_1$ des Rotors 32 bezüglich der Phase übereinstimmt. Hierbei ist entsprechend der Winkelversatz $\vartheta$, der dem Polradwinkel entspricht, gleich null. Somit spiegelt die Phasenbeziehung der Leerlaufspannung $U_P$ exakt der geometrischen Bewegung des Rotors 32 wieder und gibt somit dessen exakte Winkellage - im unbelasteten Zustand der elektrischen Maschine 30 - an.

Aufgrund der Belastung der elektrischen Maschine 30 und des daraus resultierenden Stromflusses I, eilt die Ausgangsspannung U des belasteten Generators 30 in Bezug auf deren Phase der induzierten Leerlaufspannung $U_P$ hinterher, wobei sich der Winkelversatz zwischen U und $U_P$ durch den Winkelversatz $\vartheta$, dem sogenannten Polradwinkel ergibt. Dieser ist grundsätzlich abhängig vom Spulenstrom I und ohne Kenntnis des Spulenstroms I nicht ohne weiteres berechenbar.

Zudem ergibt sich der Winkel zwischen Ausgangsspannung U und Strom I durch die angeschlossene Last und beträgt für einen rein ohmschen Verbraucher $\varphi = 0°$. Die ideale induzierte Spannung (Leerlaufspannung) $U_P$ der elektrischen Maschine, ergibt sich als Produkt aus Maschinenkonstanten, der Erregung, und der Winkelgeschwindigkeit. Im Falle einer permanenterregten Maschine ergibt sich eine konstante Erregung durch die verwendeten Permanentmagnete und damit eine zur Winkelgeschwindigkeit proportionale ideale induzierte Spannung. Aus dem Zeigerdiagramm aus Figur 5 b) ergibt sich somit für den Winkelversatz $\vartheta$:

$$\cos (\vartheta) = (U + \sin (\varphi) * X * I) / U_P.$$

Bei Verwendung eines linear arbeitenden Spannungsreglers 40, wie z.B. in Figur 3 dargestellt, und einer Ansteuerung von zumindest einem der Transistoren $T_H$, $T_L$ im linearen Bereich (Triodenbereich), lässt sich die Ausgangsspannung U der elektrischen Maschine 30 nahezu konstant (in Bezug auf die Batteriespannung) einregeln. Weiterhin führt die Verwendung des Stromrichters im generatorischen Betrieb der elektrischen Maschine 30 als Gleichrichters 34, 35 mit einem nachgeschalteten elektrischen Speicher S in Form einer Batterie B am Ausgang des Generators 30 näherungsweise zu einer rein ohmschen Last, auch wenn im Bordnetz kleinere Kapazitäten auftreten können. Hiermit geht entsprechend der Winkelversatz zwischen Ausgangsspannung U und Strom I, $\varphi$, gegen 0, wobei der Summand aus der zuvor genannten Formel (sin ($\varphi$) * X * I) ebenfalls gegen 0 geht und damit verschwindet.

Die Leerlaufspannung $U_P$ ist grundsätzlich proportional zur Drehzahl $n_{Gen}$ der elektrischen Maschine 30. Somit vereinfacht sich die zuvor genannte Formel, unter der Annahme einer im Wesentlichen konstanten Amplitude der Ausgangsspannung U und der Annahme, dass $\varphi$ gegen Null geht und somit der zweite Summand verschwindet, auf die Relation:

$$\vartheta_{aprox} = \cos^{-1} (const./n_{Gen}),$$

wobei sich die Konstante const. im Wesentlichen aus der konstanten Ausgangsspannung U und dem konstanten und damit nicht von der Drehzahl $n_{Gen}$ abhängigen Anteil der Leerlaufspannung $U_P$ ergibt.

Wählt man eine Darstellung der Formel für $\vartheta_{aprox}$ in Abhängigkeit der Flankenzeit $t_{Gen}$ statt der Drehzahl $n_{Gen}$, ergibt sich folgender Zusammenhang von $\vartheta_{aprox}$ und $t_{Gen}$:

$$\vartheta_{aprox} = \cos^{-1} (const.' * t_{Gen}),$$

wobei const.' neben den konstanten Faktoren von oben noch den konstanten Faktor zur Berechnung der Flankenzeit $t_{Gen}$ in Sekunden aus der Drehzahl $n_{Gen}$ in Umdrehungen pro Minute (rpm) enthält.

Im relevanten Zeitbereich für typische Verbrennungsmotoren von Leerlauf bis ca. 15000 rpm lässt sich diese Beziehung näherungsweise durch eine Geradengleichung mit negativer Steigung beschreiben und ermöglicht damit eine hohe Recheneffizienz in der Anwendung. Wie bereits eingangs dargestellt, haben die angegebenen Wertebereiche lediglich erläuternden Charakter und sollen die Erfindung nicht beschränken.

Bei einer derartigen Ausgestaltung der Batterieregelung bzw. einer entsprechenden Regelung der Batteriespannung derart, dass das jeweilige Stellglied 42 im linearen Bereich betrieben wird, kann der Winkelversatz $\vartheta$ in erster Näherung auch ohne Kenntnis des Stromflusses I hinreichend genau abgeschätzt werden, was eine sehr verlässliche Ermittlung des Winkelversatzes $\vartheta$ zwischen der Phasenlage der Phasenspannungen $U_U$, $U_V$, $U_W$ und der tatsächlichen Drehwinkellage $\alpha_1$ des Rotors 32 zulässt.

Demnach kann eine aus den Phasenspannungen $U_U$, $U_V$, $U_W$ ermittelte Drehwinkellage $\alpha_{Phase}$ des Rotors 32 entsprechend durch den Winkelversatz $\vartheta$, der von der jeweiligen Drehzahl $n_{Gen}$ abhängt, korrigiert werden. Hieraus kann entsprechend die tatsächliche Drehwinkelposition $\alpha$ der Kurbelwelle 17 der Brennkraftmaschine bzw. der Drehwinkellage $\alpha_1$ des Rotors 32, ermittelt werden. Diese stehen im Falle einer festen Kopplung zwischen der Welle des Rotors 32 und der Kurbelwelle 17 in einem festen Verhältnis zueinander. Es gilt daher ohne Beschränkung der Allgemeinheit $\alpha = \alpha_1$, aber $\alpha_1$ ist in den Phasensignalen $U_U$, $U_V$, $U_W$, $I_U$, $I_V$, $I_W$ nicht mehr sichtbar, sobald ein Strom fließt.

Durch entsprechende Ermittlung der unkorrigierten Drehwinkelposition $\alpha_{Phase}$ aus zumindest einem der Phasensignalen $U_U$, $U_V$, $U_W$, $I_U$, $I_V$, $I_W$ und die zuvor beschriebene Ermittlung des Polradwinkels $\vartheta$, kann die tatsächliche Winkelposition $\alpha_1$ durch:

$$\alpha_1 \approx \alpha_{Phase} + \vartheta$$

in besonders guter Näherung ermittelt werden.

Die zuvor getroffenen Annahmen zur hochgenauen Ermittlung der Drehwinkelposition $\alpha_1$ bzw. der Drehzahl n des Rotor 32 setzt jedoch voraus, dass im Zeitbereich der Ermittlung der jeweiligen Phasensignale $U_U$, $U_V$, $U_W$, $I_U$, $I_V$, $I_W$ kein Eingriff zur Regelung der Spannung des elektrischen Speichers S durch den Laderegler 40 erfolgt.

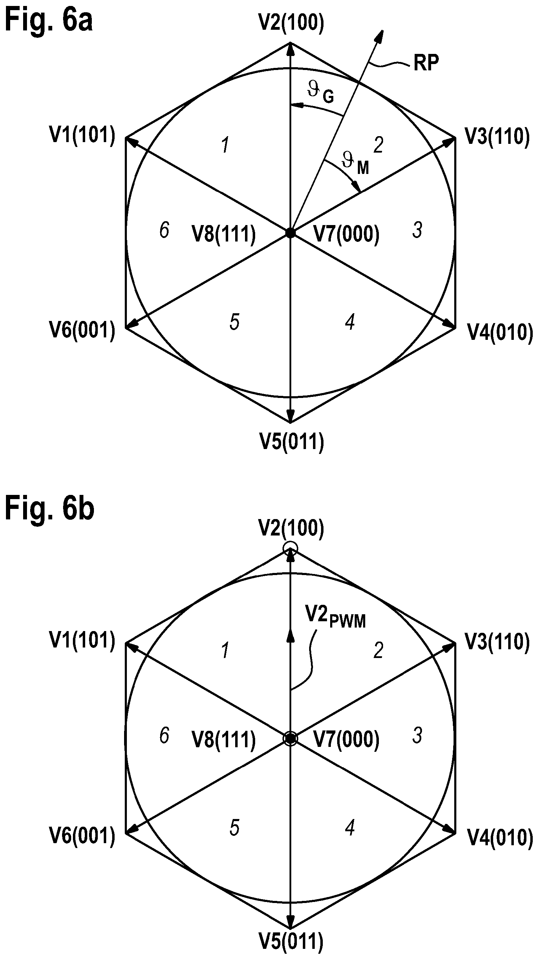

In Figur 6a sind die verschiedenen zulässigen Schaltzustände für die Ein- und/oder Ausgänge einer elektrischen Maschine 30 mit drei Phasen U, V, W zu sehen. Die Zustände V1 bis V6 beschreiben Zustände, in denen ein Stromfluss zwischen Maschine 30 und elektrischem Speicher B vorliegt, also der elektrische Speicher B im generatorischen Betrieb durch die elektrische Maschine 30 geladen wird beziehungsweise der elektrische Speicher B die elektrische Maschine 30 im motorischen Betrieb speist.

Die Zustände V7 und V8 beschreiben Zustände, in denen kein Stromfluss zwischen elektrischer Maschine 30 und elektrischem Speicher B vorliegt. Stattdessen sind die drei Phasen gegeneinander kurzgeschlossen. Die drei Ziffern in Klammern hinter den Zustandsbezeichnungen, Einsen und Nullen, bezeichnen die Schaltzustände in dem sich die einzelnen Phasen befinden. Die erste Ziffer steht für die Phase U, die zweite für die Phase V und die dritte für die Phase W. Eine Eins drückt aus, dass die Phase über den entsprechenden Schalter des Inverters mit dem positiven Ein-/Ausgang des elektrischen Speichers verbunden wird, eine Null, dass eine Verbindung zum negativen Ein-/Ausgang des elektrischen Speichers vorliegt.

Zustand V1 beispielsweise liegt dann vor, wenn die Phasen U und W mit dem positiven Ein-/Ausgang und Phase V mit dem negativen Ein-/Ausgang des elektrischen Speichers verbunden werden. Entsprechendes gilt für die weiteren Zustände V2 bis V6. Zustand V7 bezeichnet den Zustand, der die elektrische Maschine über die drei unteren Schalter des Inverters kurzschließt, V8 den Zustand, in dem die drei Phasen über die oberen Schalter des Inverters kurzgeschlossen sind.

Die elektrische Maschine 30 wird motorisch betrieben, wenn die Zustände der Phasen so gewählt werden, dass die dargestellten Zustände V1 bis V6 zyklisch aufeinander folgend in Drehrichtung vor dem Rotor (Rotorposition RP) positioniert geschaltet werden. Der Winkel zwischen dem eingestellten Schaltzustand und der Rotorposition RP wird als Polradwinkel oder Lastwinkel bezeichnet und ist als $\vartheta_M$ eingezeichnet.

Ein generatorischer Betrieb liegt vor, wenn die Schaltzustände der Rotorposition RP in Drehrichtung zeitlich nacheilen. In diesem Fall stellt sich ein Polradwinkel mit umgekehrtem Vorzeichen ein, hier als $\vartheta_G$ eingezeichnet.

Werden als Schaltzustände nur die Zustände V1 bis V6 in zyklischer Reihenfolge gewählt, spricht man von Blockkommutierung bei dem gewählten Ansteuerverfahren. Dabei wird die Spannung an den Phasenanschlüssen durch die Spannung des elektrischen Speichers vorgegeben.

Figur 6b stellt eine Erweiterung des Ansteuerverfahrens zur Einstellung der elektrischen Leistung dar. Soll für den, über den Polradwinkel $\vartheta$ und die Drehzahl (sowie bei fremderregten Maschinen über die Erregung), eingestellten Betriebspunkt nicht die maximale Leistung (motorisch oder generatorisch) abgerufen werden, kann in schneller Folge zwischen dem gewünschten Schaltzustand V1 bis V6, hier beispielhaft V2, und einem der beiden Kurzschlusszustände V7 oder V8, hier beispielhaft V7, gewechselt werden. Dabei wird im generatorischen Betrieb die elektrische Maschine 30 teilweise im Kurzschluss (Zustand V7) betrieben und so der Stromfluss in den elektrischen Speicher B in dieser Zeit unterbunden, im motorischen Betrieb wird während dieser Zeit der Stromfluss aus dem elektrischen Speicher B in die elektrische Maschine 30 verhindert.

Der resultierende Ansteuervektor $V2_{PWM}$ ergibt sich aus dem Verhältnis zwischen der Zeit $t_{on}$, in der ein Stromfluss zwischen elektrischer Maschine und elektrischem Speicher vorliegt und der Summe der Zeitdauer beider Schaltzustände ($t_{on} + t_{off}$), sowie der Länge des Vektors des Schaltzustands V2, definiert über die verfügbare Spannung, in diesem Betriebspunkt der elektrischen Maschine zu:

$$V2_{PWM} = \frac{t_{on}}{t_{on} + t_{off}} * V_2$$

Der schnelle Wechsel zwischen den beiden Schaltzuständen kann mittels Puls-Weiten-Modulation, PWM, erfolgen.

Die Entscheidung, ob der Schaltzustand V7 oder V8 zur Einstellung der Länge des resultierenden Schaltvektors gewählt wird, kann anhand der benötigten Schaltvorgänge der Schalter des Inverters getroffen werden. Für die Schaltzustände V2, V4 und V6 bietet es sich an, eine Kombination mit Schaltzustand V7 zu wählen, da nur eine Phase von eins auf null und umgekehrt geschaltet werden muss.

Für die Schaltzustände V1, V3 und V5 dagegen bietet sich die Kombination mit Schaltzustand V8 an, da nur eine Phase von null auf eins und umgekehrt geschaltet werden muss.

Es ist bevorzugt, möglichst wenige Schalter $T_H$, $T_L$ des Inverters 34, 35 gleichzeitig betätigen zu müssen, um zum einen die auftretenden Schaltverluste in den Schaltern zeitlich zu verteilen und so eine kostengünstigere Kühlung zu ermöglichen. Zum anderen kann auf Grund von Bauteiltoleranzen und anderen Einflüssen nicht gewährleistet werden, dass ein exakt gleichzeitiges Schalten aller Schalter $T_H$, $T_L$ erfolgt. Eine geringe Anzahl gleichzeitiger Schaltvorgänge unterdrückt daher hochfrequente Signalanteile, die durch hochfrequente Schaltwechsel durch unterschiedliche Schaltverzüge verursacht werden können.

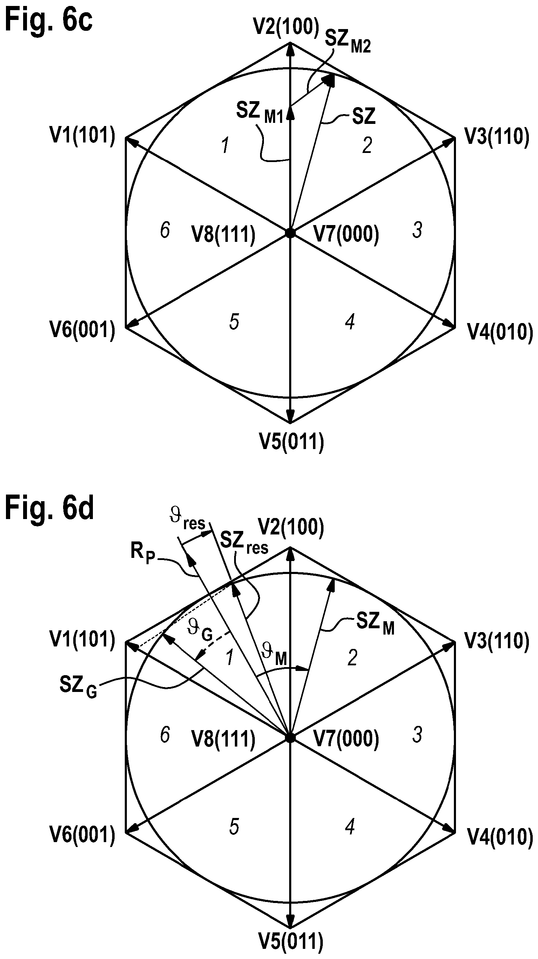

Figur 6c zeigt ein weiteres Ansteuerverfahren, bezeichnet als Raumzeigermodulation. Dieses ergibt sich, wenn nicht nur zyklisch zwischen den Schaltzuständen V1 bis V6, hier beispielhaft V2 und V3, und den Kurzschlusszuständen V7 oder V8 gewechselt wird, sondern auch Zwischenzustände zwischen V2 und V3 eingestellt werden können.

Während in den ersten beiden Verfahren die Position der möglichen Schaltzustände, dargestellt durch die Pfeile zwischen dem Mittelpunkt (V7, V8) und den Punkten V1 bis V6, begrenzt ist und damit einhergehend auch kein konstanter Polradwinkel (sondern ein zeitlich periodisch schwankender Polradwinkel) gestellt werden kann, ermöglicht die Verwendung von Zwischenzuständen eine deutlich konstantere Einstellung des Polradwinkels $\vartheta$.

Ein Zwischenzustand kann eingestellt werden, in dem die Methode des PWM-Schaltens zwischen zwei Schaltzuständen, V1 bis V6 beziehungsweise V7 oder V8, erweitert wird um einen dritten Schaltzustand, V1 bis V6, wobei sich der erste Schaltzustand V1 bis V6 und der dritte Schaltzustand V1 bis V6 nicht gleichen und zyklisch nebeneinanderliegen.

Das Verhältnis zwischen der Zeit in der der erste Schaltzustand V2 und der Zeit in der der dritte Schaltzustand V3 vorliegt, definiert die Position des resultierenden mittleren Schaltzustands zwischen den beiden Schaltzuständen, V2 und V3. Über die Zeitdauer des zweiten Schaltzustands V7 oder V8 kann die Zeigerlänge und damit die Leistung in dem Betriebspunkt eingestellt werden.

Bei kontinuierlicher Veränderung der Zeitdauern der drei Schaltzustände kann ein resultierender Ansteuervektor SZ erzielt werden, dessen Spitze sich auf einem Kreis um den Mittelpunkt bewegt. Die Berechnung der entsprechenden Zeitdauern erfolgt mittels Vektoraddition der zwei Vektoren $SZ_{M1}$ und $SZ_{M2}$ der Schaltzustände und dem gewünschten resultierenden Schaltvektor.

Die Vektoren $SZ_{M1}$ und $SZ_{M2}$ ergeben sich wie in Figur 6b gezeigt durch Wechsel zwischen V2 und V7 beziehungsweise durch Wechsel zwischen V3 und V8.

Die Positionierung des Zeigers gegenüber der Rotorposition in Drehrichtung vor beziehungsweise hinter der Rotorposition mit dem dazwischenliegenden Polradwinkel gibt, wie in den vorherigen Ansteuerverfahren, die Betriebsart, motorisch beziehungsweise generatorisch, sowie den Arbeitspunkt der elektrischen Maschine für eine gewählte beziehungsweise vorliegende Drehzahl an.

Um möglichst wenig Schalter des Inverters gleichzeitig betätigen zu müssen und die oben aufgeführten dadurch bedingten Vorteile zu erzielen, bietet sich in diesem Beispiel die Schaltsequenz V7 - V2 - V3 - V8 - V8 - V3 - V2 - V7 an.

In Figur 6d ist gezeigt, wie das effiziente Spannungsregler-Konzept, realisiert durch ein Wechseln zwischen motorischem und generatorischem Betrieb der elektrischen Maschine, durch das hochfrequente Schalten im Raumzeigerverfahren unterstützt werden kann.

Anstatt für längere Zeiträume einen motorischen Zustand mit dem Polradwinkel $\vartheta_M$ beziehungsweise einen generatorischen Zustand mit dem Polradwinkel $\vartheta_G$ einzustellen, kann auch ein hochfrequenter Wechsel zwischen diesen Zuständen erfolgen. Das Verhältnis der beiden Zeitdauern der Zustände bleibt dabei gleich, lediglich die jeweilige Zeitdauer wird stark reduziert. Beispielhaft wird die eingezeichnete Rotorlage RP angenommen. Zur Realisierung des gewünschten Motor- beziehungsweise Generatorbetriebs werden die resultierenden Schaltvektoren $SZ_M$ für den Motorbetrieb beziehungsweise $SZ_G$ für den Generatorbetrieb benötigt. Die Drehrichtung des Rotors sei ohne Beschränkung der Allgemeinheit im Uhrzeigersinn.

Berechnet man aus dem Verhältnis zwischen Zeitdauer für motorischen Betrieb und Zeitdauer für generatorischen Betrieb einen resultierenden mittleren Ansteuervektor $SZ_{res}$ kann der Spannungsregler-Betrieb vereinfacht werden auf einen motorischen Betrieb mit resultierendem Polradwinkel $\vartheta_{res}$.

Alternativ kann die Berechnung des resultierenden Zeigers aus der Zeigerlänge der Schaltvektoren $SZ_M$ und $SZ_G$ und der Addition der beiden Polradwinkel $\vartheta_M$ und $\vartheta_G$ unter Berücksichtigung der Vorzeichen erfolgen. Haben SZM und SZG unterschiedliche Zeigerlängen kann beispielsweise als Annäherung an die resultierende Zeigerlänge der Mittelwert der beiden Zeigerlängen gewählt werden.

**Patentansprüche**

1. Verfahren zum Betreiben eines Ladereglers (LR) für einen elektrischen Speicher (S), insbesondere einer Batterie (B) eines Fahrzeugbordnetzes (100), welcher mit einer an eine Brennkraftmaschine (112) direkt oder übersetzt gekoppelten elektrischen Maschine (30), umfassend einen Rotor (32), einen Stator (33) mit zumindest einer Phasensignale ($U_U$, $U_V$, $U_W$, $I_U$, $I_V$, $I_W$) erzeugenden Phasenwicklung (U, V, W), mit elektrischer Energie beaufschlagbar ist, wobei nach Erreichen oder Überschreiten eines ersten Sollwerts ($U_{soll1}$) der Spannung des elektrischen Speichers (S) die elektrische Maschine (30) durch den Laderegler (LR) derart angesteuert wird, dass die elektrische Maschine (30) motorisch betrieben wird und wobei nach Erreichen oder Unterschreiten eines weiteren Sollwerts ($U_{soll2}$) des elektrischen Speichers (S), der betragsmäßig kleiner als der erste Sollwert ($U_{soll1}$) ist, die elektrische Maschine (30) durch den Laderegler (LR) derart angesteuert wird, dass die elektrische Maschine (30) generatorisch betrieben wird, **dadurch gekennzeichnet, dass** der erste Sollwert ($U_{soll1}$) und der weitere Sollwert ($U_{soll2}$) des elektrischen Speichers (S) abhängig zur Drehzahl (n) der elektrischen Maschine (30) vorgegeben werden, wobei die Drehzahl (n) so gewählt ist, dass verhindert wird, dass bei einer Drehzahl der elektrischen Maschine und damit der Brennkraftmaschine durch eine Ladeanforderung der Batterie, die Brennkraftmaschine durch die elektrische Maschine im generatorischen Betrieb mit einem Bremsmoment beaufschlagt wird, so dass der Betrieb der Brennkraftmaschine gestört wird oder zum Erliegen kommt.

2. Verfahren nach Anspruch 1, wobei nach Erreichen oder Unterschreiten eines weiteren Sollwerts ($U_{soll2}$), der kleiner als der erste Sollwert ($U_{soll1}$) ist, die elektrische Maschine (30) durch den Laderegler (LR) derart angesteuert wird, dass die elektrische Maschine (30) generatorisch betrieben wird.

3. Verfahren nach zumindest einem der vorstehenden Ansprüche, wobei der erste Sollwert ($U_{soll1}$) und/oder der weitere Sollwert ($U_{soll2}$) des elektrischen Speichers (S) abhängig von zumindest einem Arbeitspunkt und/oder eines Betriebszustands der Brennkraftmaschine (112) vorgegeben werden.

4. Verfahren nach zumindest einem der vorstehenden Ansprüche, wobei zumindest ein Wert ($W_{Uu}$, $W_{Ud}$, $W_{Vu}$, $W_{Vd}$, $W_{Wu}$, $W_{Wd}$, $W_{U0}$, $W_{V0}$, $W_{W0}$), der jeweils wenigstens einmal pro Umdrehung des Rotors (32) auftritt und mit zumindest einer aufsteigenden Flanke ($FI_{Uu}$, $FI_{Vu}$, $FI_{Wu}$) des Phasensignals ($U_U$, $U_V$, $U_W$, $I_U$, $I_V$, $I_W$), einer abfallenden Flanke ($FI_{Ud}$, $FI_{vd}$, $FI_{Wd}$) des Phasensignals ($U_U$, $U_V$, $U_W$, $I_U$, $I_V$, $I_W$) oder einem Nulldurchgang des Phasensignals ($U_U$, $U_V$, $U_W$, $I_U$, $I_V$, $I_W$) assoziiert ist, erfasst wird, wobei die elektrische Maschine (30) durch den Laderegler (LR) nach dem Auftreten des zumindest einen Werts ($W_{Uu}$, $W_{Ud}$, $W_{Vu}$, $W_{Vd}$, $W_{Wu}$, $W_{Wd}$, $W_{U0}$, $W_{V0}$, $W_{W0}$) motorisch oder generatorisch betrieben wird.

5. Verfahren nach einem der vorstehenden Ansprüche, wobei der motorische oder generatorische Betrieb der elektrischen Maschine (30) abhängig von zumindest einer Drehwinkellage ($\alpha_{Phase}$) des Rotors (32) durchgeführt wird.

6. Verfahren nach einem der vorstehenden Ansprüche, wobei der motorische oder generatorische Betrieb der elektrischen Maschine (30) nach Auftreten des zumindest einen Werts ($W_{Uu}$, $W_{Ud}$, $W_{Vu}$, $W_{Vd}$, $W_{Wu}$, $W_{Wd}$, $W_{U0}$, $W_{V0}$, $W_{W0}$) solange aufrechterhalten wird, bis zumindest ein weiterer Wert ($W_{Uu}$, $W_{Ud}$, $W_{Vu}$, $W_{Vd}$, $W_{Wu}$, $W_{Wd}$, $W_{U0}$, $W_{V0}$, $W_{W0}$), der mit einer nachfolgenden aufsteigenden Flanke ($FI_{Uu}$, $FI_{Vu}$,

$FI_{Wu}$) des Phasensignals ($U_U$, $U_V$, $U_W$, $I_U$, $I_V$, $I_W$), abfallenden Flanke ($FI_{Ud}$, $FI_{vd}$, $FI_{Wd}$) des Phasensignals ($U_U$, $U_V$, $U_W$, $I_U$, $I_V$, $I_W$) oder einem Nulldurchgang des Phasensignals ($U_U$, $U_v$, $U_W$, $I_U$, $I_V$, $I_W$) assoziiert ist, erkannt wird.

7. Verfahren nach einem der vorstehenden Ansprüche, wobei ein Schaltvorgang des Ladereglers (LR) zum motorischen oder generatorischen Betrieb der elektrischen Maschine (30) eingeleitet wird, wenn zumindest ein zeitlicher Mindestabstand ($T_{min}$) zu zumindest einem Wert ($W_{Uu}$, $W_{Ud}$, $W_{Vu}$, $W_{Vd}$, $W_{Wu}$, $W_{Wd}$, $W_{U0}$, $W_{V0}$, $W_{W0}$), der mit einer aufsteigenden Flanke ($FI_{Uu}$, $FI_{Vu}$, $FI_{Wu}$) des Phasensignals ($U_U$, $U_V$, $U_W$, $I_U$, $I_V$, $I_W$), einer abfallenden Flanke ($FI_{Ud}$, $FI_{vd}$, $FI_{Wd}$) des Phasensignals ($U_U$, $U_V$, $U_W$, $I_U$, $I_V$, $I_W$) oder einem Nulldurchgang des Phasensignals ($U_U$, $U_V$, $U_W$, $I_U$, $I_V$, $I_W$) assoziiert ist, besteht.

8. Verfahren nach einem der vorstehenden Ansprüche, wobei ein Schaltvorgang des Ladereglers (LR) zum motorischen oder generatorischen Betrieb der elektrischen Maschine (30) zeitverzögert nach Erkennen eines Werts ($W_{Uu}$, $W_{Ud}$, $W_{Vu}$, $W_{Vd}$, $W_{Wu}$, $W_{Wd}$, $W_{U0}$, $W_{V0}$, $W_{W0}$) erfolgt.

9. Verfahren nach einem der vorstehenden Ansprüche, wobei in einem ersten Modus das Auftreten eines Werts ($W_{Uu}$, $W_{Ud}$, $W_{Vu}$, $W_{Vd}$, $W_{Wu}$, $W_{Wd}$, $W_{U0}$, $W_{V0}$, $W_{W0}$) erkannt wird, wobei nach Erkennen des Werts ($W_{Uu}$, $W_{Ud}$, $W_{Vu}$, $W_{Vd}$, $W_{Wu}$, $W_{Wd}$, $W_{U0}$, $W_{V0}$, $W_{W0}$) aus dem ersten Modus in einen weiteren Modus gewechselt wird, in dem ein motorischer oder generatorischer Betrieb der elektrischen Maschine (30) eingeleitet wird.

10. Verfahren nach einem der vorstehenden Ansprüche, wobei die elektrische Maschine (30) durch den Laderegler (LR) zum motorischen oder generatorischen Betrieb der elektrischen Maschine (30), insbesondere nach Auftreten des zumindest einen Werts ($W_{Uu}$, $W_{Ud}$, $W_{Vu}$, $W_{Vd}$, $W_{Wu}$, $W_{Wd}$, $W_{U0}$, $W_{V0}$, $W_{W0}$), zeitlich getaktet, vorzugsweise mittels Puls-Weiten-Modulation (PWM) getaktet, betrieben wird.

11. Verfahren nach Anspruch 9, wobei eine zeitliche Taktung (PWM) derart gewählt wird, dass die Betriebsspannung (U) des elektrischen Speichers (S) zwischen dem ersten Sollwert ($U_{soll1}$) und dem weiteren Sollwert ($U_{soll2}$) liegt, vorzugsweise einen konstanten Wert ($U_{const}$) annimmt.

12. Verfahren nach einem der vorstehenden Ansprüche, wobei die ein oder mehreren Phasensignale ($U_U$, $U_V$, $U_W$, $I_U$, $I_V$, $I_W$) der elektrischen Maschine (30) mittels einer elektronischen Schaltung, insbesondere einem Motorsteuergerät (122) verarbeitet werden.

**13.** Recheneinheit, vorzugsweise ein Motorsteuergerät (122) für eine Brennkraftmaschine (12), die durch eine entsprechende integrierte Schaltung und/oder durch ein auf einem Speicher gespeichertes Computerprogramm dazu eingerichtet ist, ein Verfahren nach einem der vorstehenden Ansprüche durchzuführen.

**Claims**

1. Method for operating a charging regulator (LR) for an electrical storage device (S), in particular a battery (B) of a vehicle on-board power supply (100), to which electrical energy is able to be supplied by way of an electrical machine (30) that is coupled, directly or via a transmission, to an internal combustion engine (112) and that comprises a rotor (32) and a stator (33) having at least one phase winding (U, V, W) that generates phase signals ($U_U$, $U_V$, $U_W$, $I_U$, $I_V$, $I_W$), wherein, after a first setpoint value ($U_{soll1}$) for the voltage of the electrical storage device (S) has been reached or exceeded, the electrical machine (30) is actuated by the charging regulator (LR) such that the electrical machine (30) is operated in motor mode and wherein, after a further setpoint value ($U_{soll2}$), the absolute value of which is less than the first setpoint value ($U_{soll1}$), of the electrical storage device (S) has been reached or undershot, the electrical machine (30) is actuated by the charging regulator (LR) such that the electrical machine (30) is operated in generator mode, **characterized in that** the first setpoint value ($U_{soll1}$) and the further setpoint value ($U_{soll2}$) of the electrical storage device (S) are specified depending on the speed (n) of the electrical machine (30), wherein the speed (n) is selected so as, at a speed of the electrical machine and thus of the internal combustion engine brought about by a battery charging request, to prevent a braking torque being applied to the internal combustion engine by the electrical machine in generator mode with the result that the operation of the internal combustion engine is disrupted or comes to a standstill.

2. Method according to Claim 1, wherein, after a further setpoint value ($U_{soll2}$), which is smaller than the first setpoint value ($U_{soll1}$), has been reached or undershot, the electrical machine (30) is actuated by the charging regulator (LR) such that the electrical machine (30) is operated in generator mode.

3. Method according to at least one of the preceding claims, wherein the first setpoint value ($U_{soll1}$) and/or the further setpoint value ($U_{soll2}$) of the electrical storage device (S) are specified depending on at least one operating point and/or operating state of the internal combustion engine (112).

4. Method according to at least one of the preceding claims, wherein at least one value ($W_{Uu}$, $W_{Ud}$, $W_{Vu}$, $W_{Vd}$, $W_{Wu}$, $W_{Wd}$, $W_{U0}$, $W_{V0}$, $W_{w0}$) that occurs in each case at least once per revolution of the rotor (32) and is associated with at least one rising edge ($FI_{Uu}$, $FI_{Vu}$, $FI_{Wu}$) of the phase signal ($U_U$, $U_V$, $U_W$, $I_U$, $I_V$, $I_W$), one falling edge ($FI_{Ud}$, $FI_{vd}$, $FI_{Wd}$) of the phase signal ($U_U$, $U_V$, $U_W$, $I_U$, $I_V$, $I_W$) or a zero crossing of the phase signal ($U_U$, $U_V$, $U_W$, $I_U$, $I_V$, $I_W$) is recorded, wherein the electrical machine (30) is operated in motor mode or in generator mode by the charging regulator (LR) after the occurrence of the at least one value ($W_{Uu}$, $W_{Ud}$, $W_{Vu}$, $W_{Vd}$, $W_{Wu}$, $W_{Wd}$, $W_{U0}$, $W_{V0}$, $W_{W0}$).

5. Method according to one of the preceding claims, wherein motor or generator mode of the electrical machine (30) is implemented depending on at least one rotary angle position ($\alpha_{Phase}$) of the rotor (32).

6. Method according to one of the preceding claims, wherein motor or generator mode of the electrical machine (30) is maintained, after the occurrence of the at least one value ($W_{Uu}$, $W_{Ud}$, $W_{Vu}$, $W_{Vd}$, $W_{Wu}$, $W_{Wd}$, $W_{U0}$, $W_{V0}$, $W_{W0}$), until at least one further value ($W_{Uu}$, $W_{Ud}$, $W_{Vu}$, $W_{Vd}$, $W_{Wu}$, $W_{Wd}$, $W_{U0}$, $W_{V0}$, $W_{W0}$), which is associated with a following rising edge ($FI_{Uu}$, $FI_{Vu}$, $FI_{Wu}$) of the phase signal ($U_U$, $U_V$, $U_W$, $I_U$, $I_V$, $I_W$), falling edge ($FI_{Ud}$, $FI_{vd}$, $FI_{Wd}$) of the phase signal ($U_U$, $U_V$, $U_W$, $I_U$, $I_V$, $I_W$) or a zero crossing of the phase signal ($U_U$, $U_V$, $U_W$, $I_U$, $I_V$, $I_w$), is identified.

7. Method according to one of the preceding claims, wherein a switching operation of the charging regulator (LR) for motor or generator mode of the electrical machine (30) is initiated when there is at least a minimum temporal spacing ($T_{min}$) from at least one value ($W_{Uu}$, $W_{Ud}$, $W_{Vu}$, $W_{Vd}$, $W_{Wu}$, $W_{Wd}$, $W_{U0}$, $W_{V0}$, $W_{w0}$) that is associated with a rising edge ($FI_{Uu}$, $FI_{Vu}$, $FI_{Wu}$) of the phase signal ($U_U$, $U_V$, $U_W$, $I_U$, $I_V$, $I_W$), a falling edge ($FI_{Ud}$, $FI_{vd}$, $FI_{Wd}$) of the phase signal ($U_U$, $U_V$, $U_W$, $I_U$, $I_V$, $I_W$) or a zero crossing of the phase signal ($U_U$, $U_V$, $U_W$, $I_U$, $I_V$, $I_w$).

8. Method according to one of the preceding claims, wherein a switching operation of the charging regulator (LR) for motor or generator mode of the electrical machine (30) takes place with a time delay after a value ($W_{Uu}$, $W_{Ud}$, $W_{Vu}$, $W_{Vd}$, $W_{Wu}$, $W_{Wd}$, $W_{U0}$, $W_{V0}$, $W_{w0}$) has been identified.

9. Method according to one of the preceding claims, wherein, in a first mode, the occurrence of a value ($W_{Uu}$, $W_{Ud}$, $W_{Vu}$, $W_{Vd}$, $W_{Wu}$, $W_{Wd}$, $W_{U0}$, $W_{V0}$, $W_{w0}$) is identified, wherein, after the value ($W_{Uu}$, $W_{Ud}$, $W_{Vu}$, $W_{Vd}$, $W_{Wu}$, $W_{Wd}$, $W_{U0}$, $W_{V0}$, $W_{w0}$) has been identified, a change takes place from the first mode to a further mode in which motor or generator mode of the electrical machine (30) is initiated.

**10.** Method according to one of the preceding claims, wherein the electrical machine (30) is operated in temporally clocked fashion, preferably in a fashion clocked by way of pulse-width modulation (PWM), by the charging controller (LR) for motor or generator mode of the electrical machine (30), in particular after the occurrence of the at least one value ($W_{Uu}$, $W_{Ud}$, $W_{Vu}$, $W_{Vd}$, $W_{Wu}$, $W_{Wd}$, $W_{U0}$, $W_{V0}$, $W_{W0}$).

**11.** Method according to Claim 9, wherein a temporal clocking (PWM) is selected such that the operating voltage (U) of the electrical storage device (S) lies between the first setpoint value ($U_{soll1}$) and the further setpoint value ($U_{soll2}$), and preferably assumes a constant value ($U_{const}$).

**12.** Method according to one of the preceding claims, wherein the one or more phase signals ($U_U$, $U_V$, $U_W$, $I_U$, $I_V$, $I_W$) of the electrical machine (30) are processed by way of an electronic circuit, in particular an engine control unit (122).

**13.** Computing unit, preferably an engine control unit (122) for an internal combustion engine (12), which is configured, by way of a corresponding integrated circuit and/or by way of a computer program stored on a memory, to perform a method according to one of the preceding claims.

## Revendications

**1.** Procédé permettant de faire fonctionner un régulateur de charge (LR) pour un accumulateur électrique (S), en particulier une batterie (B) d'un réseau de bord de véhicule (100), qui peut être soumis à une énergie électrique par une machine électrique (30) accouplée directement ou par engrenage à un moteur à combustion interne (112) et comprenant un rotor (32), un stator (33) pourvu d'au moins un enroulement de phase (U, V, W) générant des signaux de phase ($U_U$, $U_V$, $U_W$, $I_U$, $I_V$, $I_W$), lorsqu'une première valeur de consigne ($U_{soll1}$) de la tension de l'accumulateur électrique (S) est atteinte ou dépassée, la machine électrique (30) étant pilotée par le régulateur de charge (LR) de telle manière que la machine électrique (30) fonctionne en mode moteur et, lorsqu'une autre valeur de consigne ($U_{soll2}$) de l'accumulateur électrique (S), qui est inférieure en termes de valeur à la première valeur de consigne ($U_{soll1}$), est atteinte ou n'est pas dépassée, la machine électrique (30) étant pilotée par le régulateur de charge (LR) de telle manière que la machine électrique (30) fonctionne en mode générateur, **caractérisé en ce que** la première valeur de consigne ($U_{soll1}$) et l'autre valeur de consigne ($U_{soll2}$) de l'accumulateur électrique (S) sont prédéfinies en fonction de la vitesse de rotation (n) de la machine électrique (30), la vitesse de rotation (n) étant choisie de telle manière qu'il est empêché que le moteur à combustion interne soit soumis à un couple de freinage dans le mode générateur par la machine électrique à une vitesse de rotation de la machine électrique et ainsi du moteur à combustion interne du fait d'une demande de charge de la batterie, de telle sorte que le fonctionnement du moteur à combustion interne est perturbé ou s'arrête.

**2.** Procédé selon la revendication 1, lorsqu'une autre valeur de consigne ($U_{soll2}$), qui est inférieure à la première valeur de consigne ($U_{soll1}$), est atteinte ou n'est pas dépassée, la machine électrique (30) étant pilotée de telle manière par le régulateur de charge (LR) que la machine électrique (30) fonctionne en mode générateur.

**3.** Procédé selon au moins l'une des revendications précédentes, la première valeur de consigne ($U_{soll1}$) et/ou l'autre valeur de consigne ($U_{soll2}$) de l'accumulateur électrique (S) étant prédéfinies en fonction d'au moins un point de travail et/ou d'un état de fonctionnement du moteur à combustion interne (112).

**4.** Procédé selon au moins l'une des revendications précédentes, au moins une valeur ($W_{Uu}$, $W_{Ud}$, $W_{Vu}$, $W_{Vd}$, $W_{Wu}$, $W_{Wd}$, $W_{U0}$, $W_{V0}$, $W_{W0}$), qui apparaît respectivement au moins une fois par rotation du rotor (32) et est associée à au moins un flanc montant ($Fl_{Uu}$, $Fl_{Vu}$, $Fl_{Wu}$) du signal de phase ($U_U$, $U_V$, $U_W$, $I_U$, $I_V$, $I_W$), à un flanc descendant ($Fl_{Ud}$, $Fl_{Vd}$, $Fl_{Wd}$) du signal de phase ($U_U$, $U_V$, $U_W$, $I_U$, $I_V$, $I_W$) ou à un passage par zéro du signal de phase ($U_U$, $U_V$, $U_W$, $I_U$, $I_V$, $I_W$), étant détectée, la machine électrique (30) étant actionnée en mode moteur ou en mode générateur par le régulateur de charge (LR) après l'apparition de l'au moins une valeur ($W_{Uu}$, $W_{Ud}$, $W_{Vu}$, $W_{Vd}$, $W_{Wu}$, $W_{Wd}$, $W_{U0}$, $W_{V0}$, $W_{W0}$).

**5.** Procédé selon l'une des revendications précédentes, le mode moteur ou le mode générateur de la machine électrique (30) étant exécuté en fonction d'au moins une position d'angle de rotation ($\alpha_{Phase}$) du rotor (32).

**6.** Procédé selon l'une des revendications précédentes, le mode moteur ou le mode générateur de la machine électrique (30) étant conservé après l'apparition de l'au moins une valeur ($W_{Uu}$, $W_{Ud}$, $W_{Vu}$, $W_{Vd}$, $W_{Wu}$, $W_{Wd}$, $W_{U0}$, $W_{V0}$, $W_{W0}$), jusqu'à ce qu'au moins une autre valeur ($W_{Uu}$, $W_{Ud}$, $W_{Vu}$, $W_{Vd}$, $W_{Wu}$, $W_{Wd}$, $W_{U0}$, $W_{V0}$, $W_{W0}$), qui est associée à un flanc montant suivant ($Fl_{Uu}$, $Fl_{Vu}$, $Fl_{Wu}$) du signal de phase ($U_U$, $U_V$, $U_W$, $I_U$, $I_V$, $I_W$), à un flanc descendant ($Fl_{Ud}$, $Fl_{Vd}$, $Fl_{Wd}$) du signal de phase ($U_U$, $U_V$, $U_W$, $I_U$, $I_V$, $I_W$) ou à un passage par zéro du signal de phase ($U_U$, $U_V$,

$U_W$, $I_U$, $I_V$, $I_W$) , soit identifiée.

7. Procédé selon l'une des revendications précédentes, une opération de commutation du régulateur de charge (LR) vers le mode moteur ou le mode générateur de la machine électrique (30) étant entamée lorsqu'au moins un intervalle de temps minimal ($T_{min}$) existe par rapport à au moins une valeur ($W_{Uu}$, $W_{Ud}$, $W_{Vu}$, $W_{Vd}$, $W_{Wu}$, $W_{Wd}$, $W_{U0}$, $W_{V0}$, $W_{W0}$), qui est associée à un flanc montant ($FI_{Uu}$, $FI_{Vu}$, $FI_{Wu}$) du signal de phase ($U_U$, $U_V$, $U_W$, $I_U$, $I_V$, $I_W$), à un flanc descendant ($FI_{Ud}$, $FI_{vd}$, $FI_{Wd}$) du signal de phase ($U_U$, $U_V$, $U_W$, $I_U$, $I_V$, $I_W$) ou à un passage par zéro du signal de phase ($U_U$, $U_V$, $U_W$, $I_U$, $I_V$, $I_W$).

8. Procédé selon l'une des revendications précédentes, une opération de commutation du régulateur de charge (LR) vers le mode moteur ou le mode générateur de la machine électrique (30) étant effectuée de façon temporisée après l'identification d'une valeur ($W_{Uu}$, $W_{Ud}$, $W_{Vu}$, $W_{Vd}$, $W_{Wu}$, $W_{Wd}$, $W_{U0}$, $W_{V0}$, $W_{W0}$).

9. Procédé selon l'une des revendications précédentes, l'apparition d'une valeur ($W_{Uu}$, $W_{Ud}$, $W_{Vu}$, $W_{Vd}$, $W_{Wu}$, $W_{Wd}$, $W_{U0}$, $W_{V0}$, $W_{W0}$) étant identifiée dans un premier mode, un passage du premier mode dans un autre mode étant effectué après l'identification de la valeur ($W_{Uu}$, $W_{Ud}$, $W_{Vu}$, $W_{Vd}$, $W_{Wu}$, $W_{Wd}$, $W_{U0}$, $W_{V0}$, $W_{W0}$), dans lequel autre mode un mode moteur ou un mode générateur de la machine électrique (30) est entamé.

10. Procédé selon l'une des revendications précédentes, la machine électrique (30) étant actionnée de manière cadencée dans le temps, de préférence de manière cadencée par modulation d'impulsions en largeur (PWM), par le régulateur de charge (LR) pour le fonctionnement en mode moteur ou en mode générateur de la machine électrique (30), en particulier après l'apparition de l'au moins une valeur ($W_{Uu}$, $W_{Ud}$, $W_{Vu}$, $W_{Vd}$, $W_{Wu}$, $W_{Wd}$, $W_{U0}$, $W_{V0}$, $W_{W0}$).

11. Procédé selon la revendication 9, un cadencement dans le temps (PWM) étant sélectionné de telle sorte que la tension de service (U) de l'accumulateur électrique (S) se situe entre la première valeur de consigne ($U_{soll1}$) et l'autre valeur de consigne ($U_{soll2}$), adopte de préférence une valeur constante ($U_{const}$).

12. Procédé selon l'une des revendications précédentes, ledit un ou les plusieurs signaux de phase ($U_U$, $U_V$, $U_W$, $I_U$, $I_V$, $I_W$) de la machine électrique (30) étant traités au moyen d'un circuit électronique, en particulier d'un appareil de commande de moteur (122).

13. Unité de calcul, de préférence appareil de commande de moteur (122) pour un moteur à combustion interne (12), qui est conçue par un circuit intégré correspondant et/ou par un programme informatique stocké dans une mémoire pour exécuter un procédé selon l'une des revendications précédentes.

**Fig. 1**

# Fig. 2a

# Fig. 2b

# Fig. 2c

# Fig. 3

# Fig. 4a

# Fig. 4b

# Fig. 5a

# Fig. 5b

## Fig. 6a

## Fig. 6b

## Fig. 6c

## Fig. 6d

**IN DER BESCHREIBUNG AUFGEFÜHRTE DOKUMENTE**

**In der Beschreibung aufgeführte Patentdokumente**

- US 2009085352 A1
- DE 102010033535 A1
- DE 10150374 A1
- DE 102014206173 A1